# EUROPEAN PATENT SPECIFICATION

(11) **EP 4 510 500 B1**
(45) Date of publication and mention of the grant of the patent: **08.07.2026**
(21) Application number: 23802664.5
(22) Date of filing: 26.04.2023
(51) Int. Cl.: H04L 9/32, H04L 9/40, H04W 12/108, H04W 12/06, H04W 12/10, H04W 12/122, H04W 12/61, H04W 12/106

(54) **COMMUNICATION METHOD AND NETWORK ELEMENT DEVICE**
KOMMUNIKATIONSVERFAHREN UND NETZWERKELEMENTVORRICHTUNG
PROCÉDÉ DE COMMUNICATION ET DISPOSITIF D'ÉLÉMENT RÉSEAU

(30) Priority: 09.05.2022 CN 202210499769
(43) Date of publication of application: 19.02.2025
(73) Proprietor: Huawei Technologies Co., Ltd., Shenzhen, Guangdong 518129 (CN)
(72) Inventor: LEI, Zhongding, Shenzhen, Guangdong 518129 (CN); WANG, Haiguang, Shenzhen, Guangdong 518129 (CN); KANG, Xin, Shenzhen, Guangdong 518129 (CN); LI, Tieyan, Shenzhen, Guangdong 518129 (CN); WU, Yizhuang, Shenzhen, Guangdong 518129 (CN)
(74) Representative: Körber, Martin Hans
(86) International application number: PCT/CN2023/090971
(87) International publication number: WO 2023/216891

(56) References cited:
- EP-A1- 3 902 199
- EP-B1- 3 332 526
- WO-A1-2021/214732
- WO-A1-2022/002175
- CN-A- 110 830 991
- CN-A- 113 438 196
- KR-A- 20170 140 630
- VOIT CISCO H BIRKHOLZ FRAUNHOFER SIT T HARDJONO MIT T FOSSATI ARM LIMITED V SCARLATA INTEL E: "Attestation Results for Secure Interactions draft-ietf-rats-ar4si-02; draft-ietf-rats-ar4si-02.txt", no. 2, 7 March 2022 (2022-03-07), pages 1 - 35, XP015150826, Retrieved from the Internet <URL:https://tools.ietf.org/html/draft-ietf-rats-ar4si-02> [retrieved on 20220307]
- H. BIRKHOLZ ET AL: "Remote Attestation Procedures Architecture", 8 February 2022 (2022-02-08), pages 1 - 46, XP093288515, Retrieved from the Internet <URL:https://www.ietf.org/archive/id/draft-ietf-rats-architecture-15.txt> [retrieved on 20250620]
- NOKIA, NOKIA SHANGHAI BELL: "NF Consumer authentication for based on signed API Request", 3GPP DRAFT; S3-191532 NF CONSUMER AUTHENTICATION BASED ON SIGNED API REQUEST, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Reno, NV, USA; 20190506 - 20190510, 29 April 2019 (2019-04-29), Mobile Competence Centre ; 650, route des Lucioles ; F-06921 Sophia-Antipolis Cedex ; France , XP051721695

## Description

### TECHNICAL FIELD

Embodiments of this application relate to the communication field, and more specifically, to a communication method and a network element device.

### BACKGROUND

At present, in a service-based architecture (service-based architecture, SBA), network function (network function, NF) network elements interact with each other through a service-based interface. Each NF may be implemented by hardware or software. NFs implemented by software have advantages such as flexible deployment, cancellation, and upgrade, resource sharing between NFs, and low costs, and therefore attract attention of many operators and manufacturers.

However, if NFs are implemented in a software or virtualization manner, for example, during instantiation, initial startup, or long-term running, the NFs implemented by software face more potential security risks compared with NFs implemented by hardware. For example, software code of the NFs is maliciously tampered with, a running status is maliciously monitored, sensitive information is leaked, and a virtualized function, an operating system, a virtual machine, a virtual machine hypervisor, and the like are attacked by hackers. Therefore, additional measures are in an urgent need to prevent and mitigate potential security risks.

VOIT CISCO H BIRKHOLZ FRAUNHOFER SIT T HARDJONO MIT T FOSSATI ARM LIMITED V SCARLATA INTEL E: "Attestation Results for Secure Interactions draftietf-rats-ar4si-02; draft-ietf-rats-ar4si-02.txt", ATTESTATION RESULTS FOR SECURE INTERACTIONS DRAFT-IETF-RATS-AR4SI-02; DRAFT-IETF-RATSAR4SI-02.TXT; INTERNET-DRAFT: RATS WORKING GROUP, INTERNET ENGINEERING TASK FORCE, IETF; STANDARDWORKINGDRAFT, INT, no. 2 7 March 2022 (2022-03-07), pages 1-35, discloses attestation results for secure interactions.

H. Birkholz ET AL: "Remote Attestation Procedures Architecture", 8 February 2022 (2022-02-08), pages 1-46, discloses remote attestation procedures architecture.

EP 3 332 526 B1 discloses a subsystem for authorization and activation of features.

EP 3 902 199 A1 discloses an identity verification method for a network function service and an apparatus.

### SUMMARY

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

This application provides a communication method and a network element device, to prevent and mitigate a potential security risk faced by a network function in a mobile communication network, especially faced by a network function implemented in a software or virtualization manner.

According to a first aspect, a communication method is provided. The method may be performed by a first network function network element, or may be performed by a chip or a circuit used for a first network function network element. This is not limited in this application. For ease of description, the following uses an example for description in which the first network function network element performs the method.

The method includes: The first network function network element obtains integrity-protected attestation information, where the attestation information includes an attestation result and range indication information associated with the attestation result, the attestation result indicates whether the first network function network element is trustworthy, the range indication information indicates a validity range of the attestation result, and the range indication information includes an identifier of the first network function network element. The first network function network element generates a service request message when determining that a service provided by a second network function network element is to be requested, where the service request message includes the attestation information and an identifier of the first network function network element. The first network function network element sends the service request message to the second network function network element.

According to the solution provided in this application, the service request message carries the attestation information, so that authentication on security and trustworthiness of the first network function network element is enhanced. This can mitigate a potential security risk faced by a network function in a mobile communication network, especially faced by a network function implemented in a software or virtualization manner.

With reference to the first aspect, in some implementations of the first aspect, the range indication information further includes one or more of the following: configuration data (for example, an NF profile) or a part of the configuration data of the first network function network element, or an identifier (for example, an NRF ID) of the second network function network element.

According to the foregoing solution, the range indication information carries an additional validity range of the attestation result. To be specific, the second network function network element verifies the identifier of the first network function network element, and further needs to verify the configuration data or the part of the configuration data of the first network function network element and/or the identifier of the second network function network element. This increases dimensions of verification on the first network function network element, and further ensures authenticity and trustworthiness of the first network function network element.

With reference to the first aspect, in some implementations of the first aspect, the first network function network element sends a remote attestation request to a verifier, where the remote attestation request includes a measurement, and the measurement is used to indicate a running status of the first network function network element. That the first network function network element obtains integrity-protected attestation information is specifically: The first network function network element receives the attestation information from the verifier, where the attestation information is associated with the measurement.

According to the foregoing solution, through cross-layer interaction (the attestation information) between a network layer and a remote attestation (RA) layer, the network layer is aware of the attestation result of remote attestation on the first network function network element performed at the RA layer, and it is ensured that the remote attestation is remote attestation on the first network function network element. This ensures that the first network function network element requesting the service at the network layer is secure and trustworthy, and effectively mitigates a security risk caused by virtualization and softwarization. In addition, in this application, a service request procedure at the network layer is decoupled from a remote attestation procedure at the RA layer to the utmost, so that sensitive information (for example, evidence) of the remote attestation can be prevented from being leaked at the network layer, that is, there is no new security risk of privacy leakage.

With reference to the first aspect, in some implementations of the first aspect, the first network function network element receives a freshness parameter from the second network function network element, where the remote attestation request further includes the freshness parameter, and the attestation information is also associated with the freshness parameter.

According to the foregoing solution, the freshness parameter is a network layer parameter that needs to be bound for the remote attestation procedure at the RA layer and that is provided by the second network function network element. The second network function network element may determine, based on the freshness parameter carried in the service request message, that the remote attestation procedure at the RA layer specially responds to the remote attestation initiated by the second network function network element. This is more targeted and effective.

With reference to the first aspect, in some implementations of the first aspect, the range indication information further includes the freshness parameter.

According to the foregoing solution, real-time trustworthiness of the first network function network element can be improved by using the carried freshness parameter provided by the second network function network element. This avoids a case in which because the attestation result carried by the first network function network element was completed a long time ago, a probability that the attestation result is maliciously tampered with is increased, and the first network function network element is insecure and untrustworthy. This implementation can enhance control of the second network function network element over the remote attestation, and mitigate a potential risk. In addition, the second network function network element may determine, based on an NRF identifier and an NRF address that are carried, whether to perform subsequent verification, to avoid an unnecessary waste of resources (for example, a subsequent verification operation).

With reference to the first aspect, in some implementations of the first aspect, that the first network function network element sends the service request message to the second network function network element includes: When the attestation result indicates that the first network function network element is trustworthy, the first network function network element sends the service request message to the second network function network element.

According to the foregoing solution, the first network function network element sends the service request message only determining that the attestation result indicates that the first network function network element is trustworthy. This can reduce a subsequent unnecessary network procedure, and avoid a waste of resources. This is because the second network function network element may reject provision of the service when determining that the first network function network element is untrustworthy, causing unnecessary signaling overheads.

With reference to the first aspect, in some implementations of the first aspect, when the service is a registration service, the service request message further includes configuration data of the first network function network element, and the service request message is used to request that the configuration data of the first network function network element be stored.

With reference to the first aspect, in some implementations of the first aspect, when the service is an authorization service, the attestation information further includes a validity period of the attestation result, the service request message is used to request to obtain a first token, the first token is used to authorize the first network function network element to access a service of a third network function network element, and the method further includes: The first network function network element receives the first token and a validity period of the first token from the second network function network element, where the validity period of the first token is less than or equal to the validity period of the attestation result.

According to the foregoing solution, that the service request message is an authorization service request message is used as an example. This can prevent the first network function network element from accessing the service of the third network function network element without limitation, and mitigate a potential risk especially when the first network function network element is insecure and untrustworthy. The validity period of the first token (less than the validity period of the attestation result) is determined, to ensure that the first network function network element currently accessing the service of the third network function network element is secure and trustworthy.

With reference to the first aspect, in some implementations of the first aspect, the range indication information further includes time-validity information of the attestation result, and the time-validity information includes one or more of the following: a generation time of the attestation result; a generation time and validity duration of the attestation result; a validity deadline of the attestation result; or a counter value of the attestation result.

According to the foregoing solution, real-time validity of the remote attestation performed on the first network function network element can be determined by using the carried time-validity information of the attestation result of the remote attestation, so that the second network function network element determines whether to provide the service for the first network function network element. This avoids a potential risk caused by malicious tampering or attack, or the like after the first network function network element is provided with the service when the validity period of the attestation result is about to expire.

According to a second aspect, a communication method is provided. The method may be performed by a second network function network element, or may be performed by a chip or a circuit used for a second network function network element. This is not limited in this application. For ease of description, the following uses an example for description in which the second network function network element performs the method.

The method includes: The second network function network element receives a service request message from a first network function network element, where the service request message is used to request a service, and the service request message includes an identifier of the first network function network element. When the service request message further includes integrity-protected attestation information, the second network function network element verifies the integrity protection of the attestation information. When the verification on the integrity protection of the attestation information succeeds, the second network function network element determines, based on the attestation information, whether to provide the service for the first network function network element.

According to the solution provided in this application, when determining that the service request message carries the integrity-protected attestation information, the second network function network element verifies the attestation information, and after the verification succeeds, the second network function network element further confirms, based on specific content of the attestation information, whether to provide the service for the first network function network element. In comparison with the conventional technology, additional verification on the first network function network element is added in this implementation. This can mitigate a potential security risk faced by a network function in a mobile communication network, especially faced by a network function implemented in a software or virtualization manner.

With reference to the second aspect, in some implementations of the second aspect, when the service request message does not include the integrity-protected attestation information, the second network function network element determines, based on a preconfigured execution policy, whether to provide the service for the first network function network element.

With reference to the second aspect, in some implementations of the second aspect, that the second network function network element determines, based on a preconfigured execution policy, whether to provide the service for the first network function network element includes: The second network function network element rejects provision of the service for the first network function network element; or the second network function network element determines, based on a standard version with which the first network function network element complies, whether to provide the service for the first network function network element.

According to the foregoing solution, when determining that the service request message does not carry the integrity-protected attestation information, the second network function network element determines, based on the execution policy, whether to provide the service for the first network function network element. In comparison with the conventional technology, both security and trustworthiness of the first network function network element and the version with which the first network function network element currently complies are considered in this implementation. This implementation is more compatible, and can ensure, to some extent, normal running of the first network function network element that complies with the old standard version.

With reference to the second aspect, in some implementations of the second aspect, the attestation information includes an attestation result and range indication information associated with the attestation result, the attestation result indicates whether the first network function network element is trustworthy, the range indication information indicates a validity range of the attestation result, and the range indication information includes an identifier of the first network function network element.

With reference to the second aspect, in some implementations of the second aspect, that the second network function network element determines, based on the attestation information, whether to provide the service for the first network function network element includes: When the attestation result indicates that the first network function network element is trustworthy, and the validity range of the attestation result indicates that the attestation result is valid for the first network function network element, the second network function network element determines to provide the service for the first network function network element.

According to the foregoing solution, with reference to both the attestation result indicating that the first network function network element is trustworthy and the validity range of the attestation result indicated by the range indication information, the second network function network element determines to provide the service for the first network function network element. This implementation can improve security of the first network function network element, and mitigate a potential security risk faced by a network function at a network layer.

With reference to the second aspect, in some implementations of the second aspect, the second network function network element determines that the validity range of the attestation result indicates whether the attestation result is valid for the first network function network element.

With reference to the second aspect, in some implementations of the second aspect, that the second network function network element determines that the validity range of the attestation result indicates whether the attestation result is valid for the first network function network element includes: The second network function network element determines whether the identifier of the first network function network element carried in the range indication information is the same as the identifier of the first network function network element carried in the service request message.

For example, when determining that the identifier of the first network function network element carried in the range indication information is the same as the identifier of the first network function network element carried in the service request message, the second network function network element determines that the validity range of the attestation result indicates that the attestation result is valid for the first network function network element; otherwise, the attestation result is invalid for the first network function network element.

According to the foregoing solution, the second network function network element accepts a service request only when the attestation result indicates that the first network function network element is trustworthy and when it is further determined that the identifier of the first network function network element carried in the attestation result is consistent with the identifier of the first network function network element carried in the service request message. This ensures security of the first network function network element, and mitigates a potential security risk faced by the network function at the network layer.

With reference to the second aspect, in some implementations of the second aspect, the range indication information further includes one or more of the following: configuration data or a part of the configuration data of the first network function network element, or an identifier of the second network function network element.

According to the foregoing solution, the validity range of the attestation result is increased by using the carried range indication information. To be specific, when verifying the identifier of the first network function network element, the second network function network element further needs to verify the configuration data or the part of the configuration data of the first network function network element and/or the identifier of the second network function network element. This increases dimensions of verification on the first network function network element, can improve authenticity and trustworthiness of the first network function network element, and avoid a potential risk at the network layer. Optionally, when confirming that the range indication information does not carry the identifier of the second network function network element, the second network function network element may reject the service request of the first network function network element, thereby reducing an unnecessary waste of resources caused by attestation information verification.

With reference to the second aspect, in some implementations of the second aspect, the second network function network element preconfigures a public key or a shared key of a verifier. That the second network function network element verifies the integrity protection of the attestation information includes: The second network function network element verifies the integrity protection of the attestation information based on the public key or the shared key of the verifier.

According to the foregoing solution, the integrity protection of the attestation information is verified by using the public key or the shared key, so that authenticity of the attestation information can be determined, that is, whether the attestation information has been attacked or tampered with in a transfer process. The attestation information is used by the second network function network element to determine security and trustworthiness of the first network function network element, to mitigate a potential risk at the network layer.

With reference to the second aspect, in some implementations of the second aspect, the range indication information further includes time-validity information of the attestation result, and the time-validity information includes one or more of the following: a generation time of the attestation result; a generation time and validity duration of the attestation result; a validity deadline of the attestation result; or a counter value of the attestation result.

According to the foregoing solution, real-time validity of remote attestation performed on the first network function network element can be determined by using carried information such as a remote attestation completion moment, a validity period of the attestation result, or the counter value of the attestation result, so that the second network function network element determines whether to provide the service for the first network function network element. This avoids a potential risk caused by malicious tampering or attack, or the like after the first network function network element is provided with the service when the validity period of the attestation result is about to expire.

With reference to the second aspect, in some implementations of the second aspect, before the second network function network element receives the service request message from the first network function network element, the second network function network element sends a freshness parameter of the second network function network element to the first network function network element, where the attestation information is associated with the freshness parameter.

According to the foregoing solution, the freshness parameter provided by the second network function network element is a network layer parameter that needs to be bound for a remote attestation procedure at an RA layer. The second network function network element may determine, based on the freshness parameter carried in the service request message, that the remote attestation procedure at the RA layer specially responds to the remote attestation initiated by the second network function network element. This is more targeted and effective.

With reference to the second aspect, in some implementations of the second aspect, the range indication information further includes the freshness parameter.

According to the foregoing solution, real-time trustworthiness of the first network function network element can be improved by using the carried freshness parameter provided by the second network function network element. This avoids a case in which because the attestation result carried by the first network function network element was completed a long time ago, a probability that the attestation result is maliciously tampered with is increased, and the first network function network element is insecure and untrustworthy. This implementation can enhance control of the second network function network element over the remote attestation, and mitigate a potential risk. In addition, the second network function network element may determine, based on an NRF identifier and an NRF address that are carried, whether to perform subsequent verification, to avoid an unnecessary waste of resources (for example, a subsequent verification operation).

With reference to the second aspect, in some implementations of the second aspect, the second network function network element receives, from the verifier, an integrity-protected notification message, where the notification message indicates to update current configuration information of the second network function network element, and the notification message includes updated configuration information. The second network function network element verifies the integrity protection of the notification message based on the preconfigured public key or the preconfigured shared key of the verifier. When the verification on the integrity protection of the notification message succeeds, the second network function network element stores the updated configuration information.

According to the foregoing solution, a relationship may be established between the network layer (for example, the second network function network element) and the RA layer (for example, a RAS and a relying party), so that the network layer is aware of the notification message at the RA layer through cross-layer parameter interaction. The second network function network element verifies the integrity-protected notification message, and stores the updated configuration information after the verification succeeds. This implementation can avoid a case in which the notification message has been tampered with but the second network function network element updates the configuration information based on the notification message, thereby mitigating a potential risk at the network layer.

With reference to the second aspect, in some implementations of the second aspect, the updated configuration information includes one or more of the following: an updated attestation result, an updated public key or an updated shared key of the verifier, or an updated identifier or updated address information of the verifier.

With reference to the second aspect, in some implementations of the second aspect, the second network function network element sends a verification request message to a server function network element, where the verification request message includes the attestation information, and the verification request message is used to request to verify the integrity protection of the attestation information. The second network function network element receives a verification result from the server function network element, where the verification result indicates whether the verification on the integrity protection of the attestation information succeeds.

According to the foregoing solution, the public key or the shared key of the RAS is configured in another server function network element, for example, a verification server function (verification server function, VSF), and the VSF verifies the integrity protection of the attestation information. In this way, logic of the second network function network element can be simplified, and modifications to an existing standardized system and procedure, and the second network function network element can be avoided as much as possible.

With reference to the second aspect, in some implementations of the second aspect, when the service is a registration service, the service request message further includes configuration data of the first network function network element, and the service request message is used to request that the configuration data of the first network function network element be stored.

With reference to the second aspect, in some implementations of the second aspect, when the service is an authorization service, the attestation information further includes a validity period of the attestation result, the service request message is used to request to obtain a first token, and the first token is used to authorize the first network function network element to access a service of a third network function network element. That the second network function network element determines, based on the attestation information, whether to provide the service for the first network function network element includes: The second network function network element generates the first token, where a validity period of the first token is less than or equal to the validity period of the attestation result; and the second network function network element sends the first token and the validity period of the first token to the first network function network element.

According to the foregoing solution, by using a remote attestation technology, the network layer is aware of the attestation result of the remote attestation on the first network function network element performed at the RA layer, to ensure that the first network function network element authorized to use the service of the third network function network element is secure and trustworthy. In addition, in consideration of real-time validity of the attestation result, in this implementation, the validity period of the attestation result is added to the attestation result, and the second network function network element may further determine the validity period of the first token based on the validity period of the attestation result, to control time for accessing the service of the third network function network element by the first network function network element. This mitigates a potential security risk caused by network softwarization and virtualization.

With reference to the second aspect, in some implementations of the second aspect, when the service is an authorization service, the attestation information further includes a validity period of the attestation result, the service request message is used to request to obtain a first token, and the first token is used to authorize the first network function network element to access a service of a third network function network element. That the second network function network element determines, based on the attestation information, whether to provide the service for the first network function network element includes: The second network function network element sends the service request message to a home network repository function network element; the second network function network element receives the first token and a validity period of the first token from the home network repository function network element, where the validity period of the first token is less than or equal to the validity period of the attestation result; and the second network function network element sends the first token and the validity period of the first token to the first network function network element.

According to the foregoing solution, an authorization service request procedure in a roaming scenario, that is, a scenario in which the first network function network element and the second network function network element belong to different operator networks PLMNs, is considered, for example, the first network function network element sends an authorization service request to the home network repository function network element by using a visited network repository function network element. In this implementation, when it is ensured that the first network function network element is secure and trustworthy, in consideration of real-time validity of the attestation result, the validity period of the attestation result is added to the attestation result, and the validity period of the first token is further determined, to control time for accessing the service of the third network function network element by the first network function network element. This mitigates a potential security risk caused by network softwarization and virtualization.

According to a third aspect, a first network function network element is provided. The network element includes a processing unit and a transceiver unit. The processing unit is configured to obtain integrity-protected attestation information, where the attestation information includes an attestation result and range indication information associated with the attestation result, the attestation result indicates whether the first network function network element is trustworthy, the range indication information indicates a validity range of the attestation result, and the range indication information includes an identifier of the first network function network element. The processing unit is further configured to generate a service request message when determining that a service provided by a second network function network element is to be requested, where the service request message includes the attestation information and an identifier of the first network function network element. The transceiver unit is configured to send the service request message to the second network function network element.

With reference to the third aspect, in some implementations of the third aspect, the range indication information further includes one or more of the following: configuration data or a part of the configuration data of the first network function network element, or an identifier of the second network function network element.

With reference to the third aspect, in some implementations of the third aspect, the transceiver unit is further configured to send a remote attestation request to a verifier, where the remote attestation request includes a measurement, and the measurement is used to indicate a running status of the first network function network element. The transceiver unit is further configured to receive the attestation information from the verifier, where the attestation information is associated with the measurement.

With reference to the third aspect, in some implementations of the third aspect, the transceiver unit is further configured to receive a freshness parameter from the second network function network element, where the remote attestation request further includes the freshness parameter, and the attestation information is also associated with the freshness parameter.

With reference to the third aspect, in some implementations of the third aspect, the range indication information further includes the freshness parameter.

With reference to the third aspect, in some implementations of the third aspect, when the attestation result indicates that the first network function network element is trustworthy, the transceiver unit is further configured to send the service request message to the second network function network element.

With reference to the third aspect, in some implementations of the third aspect, the range indication information further includes time-validity information of the attestation result, and the time-validity information includes one or more of the following: a generation time of the attestation result; a generation time and validity duration of the attestation result; a validity deadline of the attestation result; or a counter value of the attestation result.

With reference to the third aspect, in some implementations of the third aspect, when the service is a registration service, the service request message further includes configuration data of the first network function network element, and the service request message is used to request that the configuration data of the first network function network element be stored.

With reference to the third aspect, in some implementations of the third aspect, when the service is an authorization service, the attestation information further includes a validity period of the attestation result, the service request message is used to request to obtain a first token, and the first token is used to authorize the first network function network element to access a service of a third network function network element. The transceiver unit is further configured to receive the first token and a validity period of the first token from the second network function network element, where the validity period of the first token is less than or equal to the validity period of the attestation result.

With reference to the third aspect, in some implementations of the third aspect, the range indication information further includes one or more of the following: a remote attestation completion moment or a counter value of the attestation result.

According to a fourth aspect, a second network function network element is provided. The network element includes: a transceiver unit and a processing unit. The transceiver unit is configured to receive a service request message from a first network function network element, where the service request message is used to request a service, and the service request message includes an identifier of the first network function network element. When the service request message further includes integrity-protected attestation information, the processing unit is configured to verify the integrity protection of the attestation information. When the verification on the integrity protection of the attestation information succeeds, the processing unit is further configured to determine, based on the attestation information, whether to provide the service for the first network function network element.

With reference to the fourth aspect, in some implementations of the fourth aspect, when the service request message does not include the integrity-protected attestation information, the processing unit is further configured to determine, based on a preconfigured execution policy, whether to provide the service for the first network function network element.

With reference to the fourth aspect, in some implementations of the fourth aspect, the processing unit is further configured to reject provision of the service for the first network function network element; or the processing unit is further configured to determine, based on a standard version with which the first network function network element complies, whether to provide the service for the first network function network element.

With reference to the fourth aspect, in some implementations of the fourth aspect, the attestation information includes an attestation result and range indication information associated with the attestation result, the attestation result indicates whether the first network function network element is trustworthy, the range indication information indicates a validity range of the attestation result, and the range indication information includes an identifier of the first network function network element.

With reference to the fourth aspect, in some implementations of the fourth aspect, when the attestation result indicates that the first network function network element is trustworthy, and the validity range of the attestation result indicates that the attestation result is valid for the first network function network element, the processing unit is further configured to determine to provide the service for the first network function network element.

With reference to the fourth aspect, in some implementations of the fourth aspect, the processing unit is further configured to determine that the validity range of the attestation result indicates whether the attestation result is valid for the first network function network element.

With reference to the fourth aspect, in some implementations of the fourth aspect, the processing unit is further configured to determine whether the identifier of the first network function network element carried in the range indication information is the same as the identifier of the first network function network element carried in the service request message.

With reference to the fourth aspect, in some implementations of the fourth aspect, the range indication information further includes one or more of the following: configuration data or a part of the configuration data of the first network function network element, or an identifier of the second network function network element.

With reference to the fourth aspect, in some implementations of the fourth aspect, the processing unit is further configured to preconfigure a public key or a shared key of a verifier; and verify the integrity protection of the attestation information based on the public key or the shared key of the verifier.

With reference to the fourth aspect, in some implementations of the fourth aspect, the identifier of the first network function network element carried in the range indication information is the same as the identifier of the first network function network element carried in the service request message, the processing unit is further configured to determine to provide the service for the first network function network element.

With reference to the fourth aspect, in some implementations of the fourth aspect, the range indication information further includes time-validity information of the attestation result, and the time-validity information includes one or more of the following: a generation time of the attestation result; a generation time and validity duration of the attestation result; a validity deadline of the attestation result; or a counter value of the attestation result.

With reference to the fourth aspect, in some implementations of the fourth aspect, the transceiver unit is further configured to send a freshness parameter of the second network function network element to the first network function network element, where the attestation information is associated with the freshness parameter.

With reference to the fourth aspect, in some implementations of the fourth aspect, the range indication information further includes the freshness parameter.

With reference to the fourth aspect, in some implementations of the fourth aspect, the transceiver unit is further configured to receive, from the verifier, an integrity-protected notification message, where the notification message indicates to update current configuration information of the second network function network element, and the notification message includes updated configuration information. The processing unit is further configured to verify the integrity protection of the notification message based on the preconfigured public key or the preconfigured shared key of the verifier. When the verification on the integrity protection of the notification message succeeds, the processing unit is further configured to store the updated configuration information.

With reference to the fourth aspect, in some implementations of the fourth aspect, the updated configuration information includes one or more of the following: an updated attestation result, an updated public key or an updated shared key of the verifier, or an updated identifier or updated address information of the verifier.

With reference to the fourth aspect, in some implementations of the fourth aspect, the transceiver unit is further configured to send a verification request message to a server function network element, where the verification request message includes the attestation information, and the verification request message is used to request to verify the integrity protection of the attestation information. The transceiver unit is further configured to receive a verification result from the server function network element, where the verification result indicates whether the verification on the integrity protection of the attestation information succeeds.

With reference to the fourth aspect, in some implementations of the fourth aspect, when the service is a registration service, the service request message further includes configuration data of the first network function network element, and the service request message is used to request that the configuration data of the first network function network element be stored.

With reference to the fourth aspect, in some implementations of the fourth aspect, when the service is an authorization service, the attestation information further includes a validity period of the attestation result, the service request message is used to request to obtain a first token, and the first token is used to authorize the first network function network element to access a service of a third network function network element. The processing unit is further configured to generate the first token, where a validity period of the first token is less than or equal to the validity period of the attestation result. The transceiver unit is further configured to send the first token and the validity period of the first token to the first network function network element.

With reference to the fourth aspect, in some implementations of the fourth aspect, when the service is an authorization service, the attestation information further includes a validity period of the attestation result, the service request message is used to request to obtain a first token, and the first token is used to authorize the first network function network element to access a service of a third network function network element. The transceiver unit is further configured to send the service request message to a home network repository function network element. The transceiver unit is further configured to receive the first token and a validity period of the first token from the home network repository function network element, where the validity period of the first token is less than or equal to the validity period of the attestation result. The transceiver unit is further configured to send the first token and the validity period of the first token to the first network function network element.

With reference to the fourth aspect, in some implementations of the fourth aspect, the range indication information further includes one or more of the following: a remote attestation completion moment or a counter value of the attestation result.

According to a fifth aspect, a network function network element is provided, including a transceiver, a processor, and a memory. The processor is configured to control the transceiver to send and receive signals. The memory is configured to store a computer program. The processor is configured to invoke the computer program from the memory and run the computer program, so that the network function network element performs the method in any one of the first aspect or the second aspect, or the possible implementations of the first aspect or the second aspect.

Optionally, there are one or more processors and one or more memories.

Optionally, the memory may be integrated with the processor, or the memory and the processor are disposed separately.

Optionally, the network function network element further includes a transmitter (transmitter) and a receiver (receiver).

According to a sixth aspect, a communication system is provided, including a first network function network element and a second network function network element.

According to a seventh aspect, this application provides a computer-readable storage medium. The computer-readable storage medium stores a computer program or code. When the computer program or code is run on a computer, the computer is enabled to perform the method in any one of the first aspect or the second aspect, or the possible implementations of the first aspect or the second aspect.

According to an eighth aspect, a chip is provided, including at least one processor. The at least one processor is coupled to a memory. The memory is configured to store a computer program. The processor is configured to invoke the computer program from the memory and run the computer program, so that a network function network element in which the chip system is installed performs the method in any one of the first aspect or the second aspect, or the possible implementations of the first aspect or the second aspect.

The chip may include an input circuit or interface configured to send information or data, and an output circuit or interface configured to receive information or data.

According to a ninth aspect, a computer program product is provided. The computer program product includes computer program code. When the computer program code is run by a network function network element, the network function network element is enabled to perform the method in any one of the first aspect or the second aspect, or the possible implementations of the first aspect or the second aspect.

### BRIEF DESCRIPTION OF DRAWINGS

FIG. 1 is a diagram of a structure of a network architecture according to an embodiment of this application;
FIG. 2 is a schematic flowchart of remote attestation according to an embodiment of this application;
FIG. 3 is a schematic flowchart of NF registration according to an embodiment of this application;
FIG. 4 is a schematic flowchart of obtaining an authorization token (token) according to an embodiment of this application;
FIG. 5 is a schematic flowchart of a first communication method according to an embodiment of this application;
FIG. 6 is a schematic flowchart of a second communication method according to an embodiment of this application;
FIG. 7 is a schematic flowchart of a third communication method according to an embodiment of this application;
FIG. 8 is a schematic flowchart of a fourth communication method according to an embodiment of this application;
FIG. 9 is a schematic flowchart of a fifth communication method according to an embodiment of this application;
FIG. 10 is a schematic flowchart of a sixth communication method according to an embodiment of this application;
FIG. 11 is a schematic flowchart of a seventh communication method according to an embodiment of this application;
FIG. 12 is a diagram of a structure of a network element device according to an embodiment of this application; and
FIG. 13 is a diagram of a structure of another network element device according to an embodiment of this application.

### DESCRIPTION OF EMBODIMENTS

The following describes technical solutions of this application with reference to accompanying drawings.

The technical solutions provided in this application can be applied to various communication systems, for example, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (internet of things, IoT) communication system, or another communication system.

In a communication system, a network operated by an operator may be referred to as a public land mobile network (public land mobile network, PLMN), which may also be referred to as an operator network or the like. The PLMN is a network established and operated by a government or an operator approved by the government to provide a land mobile communication service for the public, and is mainly a public network in which a mobile network operator (mobile network operator, MNO) provides a mobile broadband access service for users. The PLMN described in embodiments of this application may be specifically a network compliant with the 3rd generation partnership project (3rd generation partnership project, 3GPP) specification, which is referred to as a 3GPP network for short. The 3GPP network usually includes but is not limited to a 5th generation (5th generation, 5G) mobile communication network, a 4th generation (4th generation, 4G) mobile communication network, and other future communication systems such as a (6th generation, 6G) network.

For ease of description, a PLMN or a 5G network is used as an example for description in embodiments of this application.

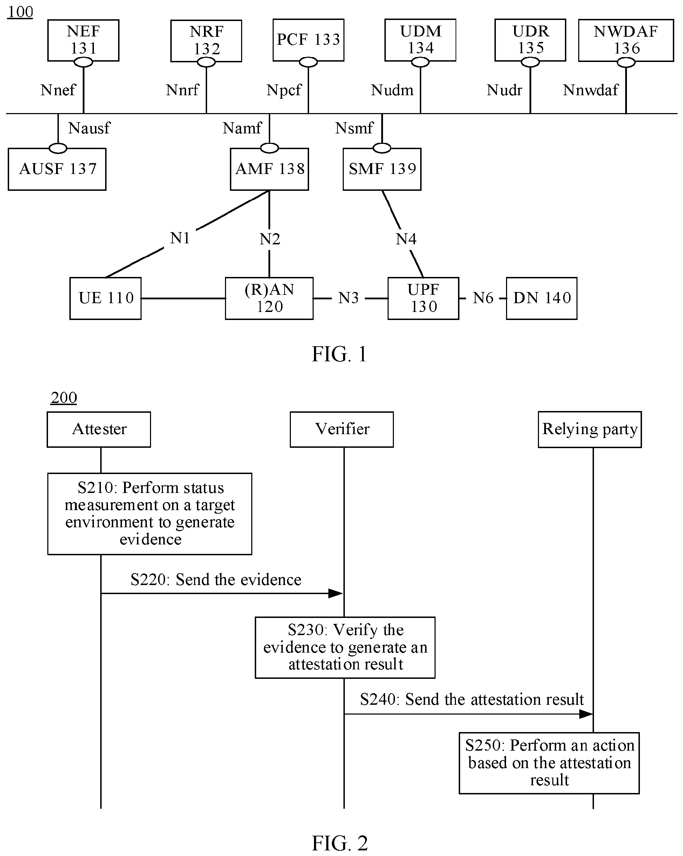

FIG. 1 is a diagram of a structure of a network architecture according to an embodiment of this application. A 5G network architecture based on a service-based architecture SBA in a non-roaming scenario defined in a 3GPP standardization process is used as an example. As shown in FIG. 1, the network architecture may include three parts: a terminal device part, a data network (data network, DN) part, and an operator network PLMN part. The following briefly describes functions of network elements in the parts.

The terminal device part may include a terminal device 110, and the terminal device 110 may also be referred to as user equipment (user equipment, UE). The terminal device 110 in this application is a device having wireless sending and receiving functions, and may communicate with one or more core network (core network, CN) devices by using an access network device (or may be referred to as an access device) in a radio access network (radio access network, RAN) 140. The terminal device 110 may also be referred to as an access terminal, a terminal, a subscriber unit, a subscriber station, a mobile station, a mobile console, a remote station, a remote terminal, a mobile device, a user terminal, a user agent, a user apparatus, or the like. The terminal device 110 may be deployed on land, including an indoor, outdoor, handheld, or vehicle-mounted device; may be deployed on the water (for example, a ship); or may be deployed in the air (for example, on an aircraft, a balloon, or a satellite). The terminal device 110 may be a cellular phone (cellular phone), a cordless telephone set, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device 110 may be a handheld device having a wireless communication function, a computing device, another device connected to a wireless modem, a vehicle-mounted device, a wearable device, an uncrewed aerial vehicle device, a terminal in an internet of things or an internet of vehicles, a terminal in any form in the 5G network or a future network, relay user equipment, a terminal in a future evolved 6G network, or the like. The relay user equipment may be, for example, a 5G home gateway (residential gateway, RG). For example, the terminal device 110 may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. The terminal device herein is a 3GPP terminal. A type, a category, or the like of the terminal device is not limited in embodiments of this application. For ease of description, in this application, an example in which UE represents a terminal device is used for description below.

The operator network PLMN part may include but is not limited to a (radio) access network ((radio) access network, (R)AN) 120 and a core network (core network, CN) part.

The (R)AN 120 may be considered as a subnetwork of the operator network, and is an implementation system between a service node in the operator network and the terminal device 110. To access the operator network, the terminal device 110 first passes through the (R)AN 120, and then may be connected to the service node in the operator network through the (R)AN 120. The access network device (a RAN device) in this embodiment of this application is a device that provides a wireless communication function for the terminal device 110, and may also be referred to as a network device. The RAN device includes but is not limited to a next generation NodeB (next generation node base station, gNB) in a 5G system, an evolved NodeB (evolved NodeB, eNB) in long term evolution (long term evolution, LTE), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), a transmission reception point (transmission reception point, TRP), a transmission point (transmission point, TP), a small-cell device (pico), a mobile switching center, or a network device in a future network. In systems using different radio access technologies, a device with functions of the access network device may have different names. For ease of description, in all embodiments of this application, the foregoing apparatuses that provide a wireless communication function for the terminal device 110 are collectively referred to as access network devices, or referred to as RANs or ANs for short. It should be understood that a specific type of the access network device is not limited in this specification.

The CN part may include but is not limited to the following network functions (Network Functions, NFs): a user plane function (user plane function, UPF) 130, a network exposure function (network exposure function, NEF) 131, a network repository function (network repository function, NRF) 132, a policy control function (policy control function, PCF) 133, a unified data management (unified data management, UDM) function 134, a unified data repository (unified data repository, UDR) function 135, a network data analytics function (network data analytics function, NWDAF) 136, an authentication server function (Authentication Server Function, AUSF) 137, an access and mobility management function (access and mobility management function, AMF) 138, and a session management function (session management function, SMF) 139.

The data network DN 140 may also be referred to as a packet data network (packet data network, PDN), and is usually a network located outside the operator network, for example, a third-party network. Certainly, in some implementations, the DN may be alternatively deployed by an operator, that is, the DN belongs to a part of the PLMN. Whether the DN belongs to the PLMN is not limited in this application. The operator network PLMN may access a plurality of data networks DNs 140. The data network DN 140 may be deployed with a plurality of services, and may provide a data service, a voice service, and/or the like for the terminal device 110. For example, the data network DN 140 may be a private network of a smart factory, a sensor installed in a workshop of the smart factory may be the terminal device 110, a control server of the sensor is deployed in the data network DN 140, and the control server may provide a service for the sensor. The sensor may communicate with the control server to obtain instructions of the control server, transmit collected sensor data to the control server according to the instructions, and the like. For another example, the data network DN 140 may be an internal office network of a company, a mobile phone or a computer of an employee of the company may be the terminal device 110, and the mobile phone or the computer of the employee may access information, data resources, and the like in the internal office network of the company. The terminal device 110 may establish a connection to the operator network through an interface (for example, N1) provided by the operator network, and use the data service, the voice service, and/or the like provided by the operator network. The terminal device 110 may further access the data network DN 140 through the operator network, and use an operator service deployed in the data network DN 140 and/or a service provided by a third party.

The following further briefly describes NF functions included in the CN.
1. The UPF 130 is a gateway provided by an operator, and is a gateway for communication between the operator network and the data network DN 140. The UPF network function 130 includes user plane-related functions such as data packet routing and transmission, data packet detection, traffic usage reporting, quality of service (quality of service, QoS) handling, lawful interception, uplink data packet detection, and downlink data packet storage.
2. The NEF 131 is a control plane function provided by the operator, and is mainly configured for enabling a third party to use a service provided by a network, supporting the network in exposure of capabilities of the network, events and data analysis, secure provision of information from an external application to the PLMN, translation of information exchanged inside and outside the PLMN, and the like.
3. The NRF 132 is a control plane function provided by the operator, and may be configured to maintain real-time information of network functions and services in a network. For example, the NRF 132 supports network service discovery, maintains services supported by NF configuration data (an NF profile) of NF instances, supports service discovery of a communication proxy (service communication proxy, SCP), maintains SCP configuration data (an SCP profile) of SCP instances, sends notifications about newly registered, deregistered, and updated NFs and SCPs, maintains health statuses of NFs and SCPs, and the like.
4. The PCF 133 is a control plane function provided by the operator. The PCF 133 supports a unified policy framework to govern network behavior, provides policy rules to other control plane functions, accesses subscription information related to policy decisions, and the like.
5. The UDM 134 is a control plane function provided by the operator, and is responsible for storage of a subscription permanent identifier (subscription permanent identifier, SUPI) of a subscriber of the operator network, a generic public subscription identifier (generic public subscription identifier, GPSI) of the subscriber, a credential (credential), and other information. The SUPI is first encrypted during transmission, and an encrypted SUPI is referred to as a subscription concealed identifier (subscription concealed identifier, SUCI). The information stored in the UDM network function 134 may be used for authentication and authorization for accessing the operator network by the terminal device 110. The subscriber of the operator network may be specifically a user using a service provided by the operator network, for example, a user using a subscriber identity module (subscriber identity module, SIM) card of China Telecom or a user using a SIM card of China Mobile. The credential of the subscriber may be a long-term key stored in the SIM card, or a stored small file, for example, information related to encryption of the SIM card, and is used for authentication and/or authorization. It should be noted that the permanent identifier, the credential, a security context, authentication data (cookie), a token, and other information that are related to verification/authentication and authorization are not limited or distinguished between each other for ease of description in embodiments of this application.
6. The UDR 135 is a control plane function provided by the operator, and is configured for providing a function of storage and retrieval of subscription data for the UDM, providing a function of storage and retrieval of policy data for the PCF, storage and retrieval of NF group ID (group ID) information of a user, and the like.
7. The NWDAF 136 is a control plane function provided by the operator. Main functions of the NWDAF 136 are to collect data from NFs, external application functions (application functions, AFs), an operations, administration, and maintenance (operations, administration, and maintenance, OAM) system, and the like, and provide NWDAF service registration, data exposure, analytics data, and the like for the NFs and the AFs.
8. The AUSF 137 is a control plane function provided by the operator, and is usually used for primary authentication, namely, authentication between the terminal device 110 (the subscriber) and the operator network. After receiving an authentication request initiated by the subscriber, the AUSF network function 137 may perform authentication and/or authorization on the subscriber by using authentication information and/or authorization information stored in the UDM network function 134, or generate authentication information and/or authorization information of the subscriber by using the UDM network function 134. The AUSF network function 137 may feed back the authentication information and/or the authorization information to the subscriber.
9. The AMF 138 is a control plane network function provided by the operator network, and is responsible for access control and mobility management for accessing the operator network by the terminal device 110, for example, including mobility status management, allocation of a temporary user identity, user authentication and authorization, and other functions.
10. The SMF 139 is a control plane network function provided by the operator network, and is responsible for management of a protocol data unit (protocol data unit, PDU) session of the terminal device 110. The PDU session is a channel for transmitting a PDU, and the terminal device and the data network DN 140 need to transmit the PDU to each other through the PDU session. The SMF network function 139 is responsible for establishment, maintenance, deletion, and the like of the PDU session. The SMF network function 139 includes session-related functions such as session management (for example, session establishment, modification, and release, including tunnel maintenance between the user plane function UPF 130 and the (R)AN 120), selection and control of the UPF network function 130, service and session continuity (service and session continuity, SSC) mode selection, and roaming.

It can be understood that the foregoing network element or function may be a physical entity in a hardware device, may be a software instance running on dedicated hardware, or may be a virtualized function instantiated on a shared platform (for example, a cloud platform). In brief, one NF may be implemented by hardware or software.

In FIG. 1, Nnef, Nnrf, Npcf, Nudm, Nudr, Nnwdaf, Nausf, Namf, Nsmf, N1, N2, N3, N4, and N6 are interface sequence numbers. For example, for meanings of the interface sequence numbers, refer to meanings defined in the 3GPP standard protocol. The meanings of the interface sequence numbers are not limited in this application. It should be noted that interface names between the network functions in FIG. 1 are merely examples. During specific implementation, the interface names of the system architecture may be alternatively other names. This is not limited in this application. In addition, names of messages (or signaling) transmitted between the foregoing network elements are also merely examples, and do not constitute any limitation on functions of the messages.

For ease of description, in this embodiment of this application, network functions (for example, the NEF 131, ..., and the SMF 139) are collectively referred to as NFs for short. In other words, an NF described below in embodiments of this application may be replaced with any network function. Moreover, FIG. 1 describes only some network functions used as an example, and the NFs described below are not limited to the network functions shown in FIG. 1.

It should be understood that the foregoing network architecture to which this embodiment of this application is applied is merely a network architecture described from a perspective of the service-based architecture, and network architectures to which this embodiment of this application is applicable are not limited thereto. This embodiment of this application is applicable to any network architecture that can implement functions of the foregoing network elements.

It should also be understood that the AMF, the SMF, the UPF, the NEF, the AUSF, the NRF, the PCF, and the UDM shown in FIG. 1 can be understood as network elements in the core network that are configured to implement different functions, for example, may be combined into a network slice depending on a requirement. These network elements in the core network may be independent devices, or may be integrated into a same device to implement different functions. Specific forms of the foregoing network elements are not limited in this application.

It should also be understood that the names are defined merely for ease of differentiation between different functions, and should not constitute any limitation on this application. In this application, other names may be used in the 5G network and other future networks. For example, in the 6G network, some or all of the foregoing network elements may still use terms in 5G, or may use other names.

For ease of understanding embodiments of this application, terms or technologies used in this application are briefly described first.

### 1. Remote attestation (remote attestation, RA)

Remote attestation is a technology in the field of trusted computing. By using the remote attestation technology, a verifier (verifier, or referred to as an RA server (RA server, RAS)) may remotely verify whether an application program, a virtual network function (virtual network function, VNF), a virtual machine (virtual machine, VM), a virtual machine hypervisor (hypervisor), an operating system, a software platform, a network function virtualization infrastructure (network function virtualization infrastructure, NFVI), or the like that is run on an attester (attester, or referred to as an RA client (RA client)) is secure and trustworthy.

It should be noted that remote attestation may also be referred to as remote authentication. This is not limited in this application.

FIG. 2 is a schematic flowchart of remote attestation 200 according to an embodiment of this application. As shown in FIG. 2, the method includes a plurality of steps as follows.

S210: An attester performs status measurement (measurement) on a target environment to generate evidence.

For example, the target environment includes a process, a VNF, a VM, an NFVI, and the like that are run on the attester.

It should be noted that the attester has a built-in environment that is securely protected, for example, a tamper proof (tamper proof) environment, including a trusted platform module (trusted platform module, TPM), a trusted execution environment (trusted execution environment, TEE), an embedded secure element (embedded secure element, eSE), or the like. The environment stores a root of trust (root of trust, RoT) that is securely protected.

Specifically, the attester needs to perform integrity measurement on a status of the target environment running on a device of the attester, including the following steps:
First, the attester performs integrity measurement on hardware resources (hardware resources) of an NFVI layer (for example, firmware (firmware) and a basic input/output system (basic input/output system, BIOS) of the NFVI layer) based on the built-in RoT; second, performs integrity measurement on a hypervisor (hypervisor) based on the hardware resources; then, performs integrity measurement on a VM of a network function virtualization (network function virtualization, NFV) layer based on the hypervisor; and finally, performs integrity measurement on the VNF based on a virtual RoT (namely, a virtual RoT or a vRoT) stored in virtualized hardware resources or based on the hypervisor.

In the foregoing integrity measurements, the attester performs integrity protection on hardware resources, hypervisors, VNFs, VMs, and the like at different layers (for example, the NFVI layer and the NFV layer) by using a hierarchical measurement principle. For example, the attester hierarchically uses a one-way function, for example, a hash (hash) algorithm, to separately perform a hash operation on an obtained running status of the hardware resource, the hypervisor, the VNF, the VM, or the like to generate a hash value.

Correspondingly, after performing status measurement on the target environment of the attester, the attester generates a set of claims (claims) referred to as evidence (evidence). To be specific, the evidence includes measurement values of software and hardware platforms, programs, and the like of the attester.

Further, the attester performs integrity protection on the evidence by using a key stored or obtained by the attester, for example, by executing a digital signature.

Optionally, before performing status measurement on the target environment, the attester receives, from a verifier, a message that indicates to initiate a remote attestation procedure.

S220: The attester sends the evidence to the verifier.

Correspondingly, the verifier receives the evidence from the attester.

The evidence is generated by performing status measurement on the target environment of the attester, and integrity protection is performed on the evidence based on the key of the attester.

It should be understood that the verifier is usually not in a same device as (that is, remote from) the attester.

S230: The verifier verifies the evidence to generate an attestation result (attestation result).

For example, the verifier checks validity of the evidence, that is, checks whether the evidence is trustworthy. Specifically, by using a reference value generated based on an expected status of the attester, or an obtained or stored reference value, the verifier compares the received evidence with the reference value to determine whether a status of the attester is consistent with the expected status, and generates the attestation result. If the evidence is consistent with the reference value, it indicates that the status of the attester is trustworthy and the attester is not attacked. Otherwise, if the evidence is inconsistent with the reference value, it indicates that the status of the attester is untrustworthy, and it can be determined that the status of the attester is abnormal.

It should be noted that the attestation result may also be referred to as an authentication result. This is not limited in this application.

S240: The verifier sends the attestation result to a relying party (relying party).

Correspondingly, the relying party receives the attestation result from the verifier.

S250: The relying party performs a corresponding action based on the attestation result sent by the verifier.

It should be understood that in the remote attestation procedure, the relying party is an entity for execution based on the attestation result, that is, performs the corresponding action based on the attestation result sent by the verifier.

For example, if the attestation result provided by the verifier is that the verification fails, it indicates that the attester is abnormal, and the relying party may handle the attester based on the attestation result, for example, rejecting continuing to use resources by the attester, and notifying an owner of the attester of taking measures, such as intervention and check on the attester.

It should be noted that the foregoing description of the remote attestation is merely an example of remote attestation. In a specific implementation, there may be other different measurement manners, different manners of generating evidence, different methods for generating the attestation result, different manners of interaction between the attester, the verifier, and the relying party, and different interaction models (for example, no relying party is needed). A specific implementation method of the remote attestation is not limited in this application.

### 2. Integrity protection (integrity protection)

Integrity protection is to use a physical means or a cryptographic method to ensure that information is not tampered with or is not modified without authorization during generation, transmission, and storage of the information, and subsequent operations.

Integrity protection may be performed on information by using the cryptographic method in a plurality of manners. For example, a private key (private key) in an asymmetric key is used to execute a digital signature on information, a one-way function (for example, a hash function Hash) is used to generate a message authentication code (message authentication code, MAC) by using a symmetric key (a shared key) and information as input parameters, or a one-way function (for example, a hash function Hash) rather than a key is used independently to generate a hash value hash value by using information as an input parameter.

### 3. Freshness (freshness) parameter

A freshness parameter is a parameter added to an input parameter to prevent replay attacks (replay attacks). The freshness parameter is added to the input parameter to ensure that an output parameter is newly generated (fresh).

For example, a common freshness parameter includes a nonce (nonce), a timestamp (timestamp), a counter value (count or index), and the like.

In a core network based on a service-based architecture SBA, NFs on a control plane interact with each other through a service-based interface. To be specific, any two NFs are physically connected, and may directly or indirectly interact with each other by using another NF like a service communication proxy SCP, that is, one NF invokes a service provided by another NF. The service-based architecture enables a 5G system to better support NFV and software defined networking (software defined networking, SDN), so that network deployment is more flexible and resources are more effectively used. To ensure security of interaction between NFs in a network, in a 5G network, each NF (for example, an NFp or an NFc) needs to first obtain authorization from an NRF before interacting with another NF. The NF may obtain authorization from the NRF by performing a registration procedure with the NRF. The NF may alternatively obtain authorization from the NRF by using a procedure for obtaining a token from the NRF.

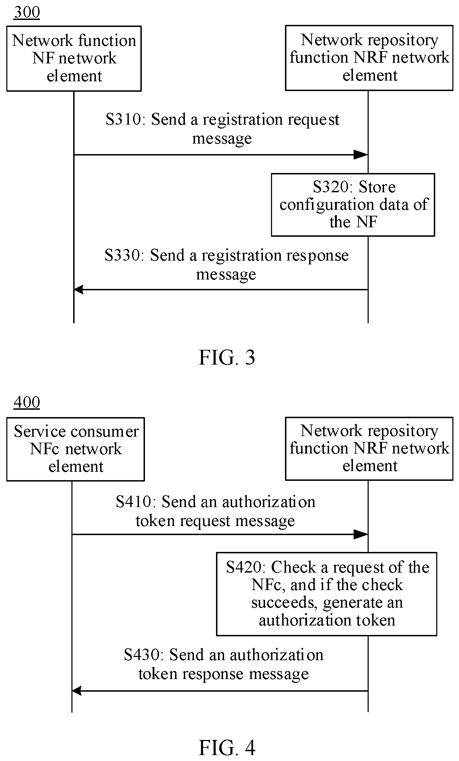

FIG. 3 is a schematic flowchart of NF registration 300 according to an embodiment of this application. As shown in FIG. 3, the method includes a plurality of steps as follows.

S310: An NF (for example, an NFc or an NFp) sends a registration request (registration request) message to an NRF.

Correspondingly, the NRF receives the registration request message from the NF.

The registration request message includes configuration data of the NF (an NF profile), and the NF profile includes an instance identifier (instance ID) of the NF.

Optionally, the NF profile may further include other information. For example, the NFp requests registration with the NRF. Configuration data of the NFp may further include specific resources or specific operations of the NFp that can be used for different types of NFcs (for example, an SMF or an AMF) or NFcs with different instance IDs.

To ensure security of information exchange between the NF and the NRF, the NF and the NRF may exchange registration information based on the OAuth 2.0 standard authorization framework defined by the Internet Engineering Task Force (Internet Engineering Task Force, IETF). In OAuth 2.0, a client (client) is corresponding to the NF herein, a client ID is corresponding to the instance ID of the NF, and an authorization server (authorization server) is corresponding to the NRF.

S320: If accepting a registration request of the NF, the NRF (namely, the authorization server) stores the configuration data of the NF.

It should be noted that the NRF may verify the request before accepting the NF.

For example, based on the OAuth authorization framework, the NRF verifies whether information about the registration request is authentic and valid, to determine whether to accept the request of the NF. The OAuth authorization framework does not limit a specific verification method used by the NRF. For example, the NF may obtain a digital certificate in advance, where the certificate is issued by the NRF or another network element, and a valid profile of the NF is described in the certificate. The NRF verifies authenticity of the digital certificate by using a public key of an issuer (the NRF or the another NE), to determine authenticity of content in the certificate. Similarly, the NF may obtain, in advance, an NF profile signed by the NRF or another network element, and the NRF verifies authenticity of a signature by using a public key of a signer, to determine authenticity of the NF profile. The NF and the NRF may alternatively use another pre-agreed credential (credential) or method (for example, a password or a shared key), so that the NRF can verify authenticity of the NF profile. This is not limited in this application.

Further, in case of the digital certificate, the NRF may further check whether a parameter in the profile described in the certificate is consistent with a parameter in the NF profile in the request message.

S330: The NRF sends a registration response message to the NF.

Correspondingly, the NF receives the registration response message from the NRF.

The registration response message is used to notify the NF that the service registration succeeds (or fails).

In addition, the NF may also obtain authorization from the NRF by using a token request procedure. For example, assuming that an NFc needs to use a service of another NFp, the NFc may initiate a token request procedure to the NRF before using the service of the NFp, to obtain a token (token) that is issued by the NRF and that is for using the service of the NFp. Then, the NFc may initiate a service use request to the NFp by using the token. After verifying authenticity and validity of the token presented by the NFc, the NFp allows the NFc to use the service of the NFp.

It should be noted that the NF registration procedure provided above is merely an example for description, and this application is not limited thereto. Other methods and processes that can implement NF registration fall within the protection scope of this application.

FIG. 4 is a schematic flowchart of an NF authorization token (token) 400 according to an embodiment of this application. As shown in FIG. 4, the method includes a plurality of steps as follows.

S410: An NFc sends an authorization token request message to an NRF.

Correspondingly, the NRF receives the authorization token request message from the NFc.

The request message is used to request to obtain an authorization token for accessing an NFp. The request message may include an instance identifier (for example, an NF instance ID(s) of an NF service consumer) of the NFc.

Optionally, the request message may further include an NF type of the NFc, a service expected by the NFc (for example, an expected NF service name(s)), an NF type of an NFp that the NFc expects to perform service access, and the like.

For example, the NFc is an access and control network function AMF network element, and the NFp is a session management function SMF network element, a unified data management UDM function network element, or the like.

Optionally, before the NFc sends the authorization token request message to the NRF, the NFc and the NFp complete registration with the NRF. For a specific NF registration procedure, refer to the method 300. Details are not described herein again.

It should be noted that this implementation is applicable to a case in which the NFc and the NFp belong to a same operator, and is also applicable to a case in which the NFc and the NFp belong to different operators. For example, if the NFc and the NFp belong to different operators, the request message may further include a PLMN ID1 and a PLMN ID2. The PLMN ID1 is identification information of a network in which the NFc is located, and the PLMN ID2 is identification information of a network corresponding to the NFp network element. The NFc sends the request message to an NRF that belongs to a same operator network (the PLMN ID1) as the NFc. The NRF determines, based on the PLMN ID2, another NRF in the operator network (the PLMN ID2) in which the NFp is located, and sends the request message to the NRF corresponding to the PLMN ID2, to obtain the token.

S420: The NRF checks a request of the NFc, and if the check succeeds, the NRF generates the authorization token.

For example, the NRF checks the request of the NFc. For a check method, refer to the description of step S320 in the method 300. In addition, if the NRF stores a profile of the NFc, the NRF may check whether a parameter in the request message is consistent with a parameter in the stored NF profile of the NF. Moreover, the NRF may further check whether a parameter (for example, a service type of the NFc or a requested service type of the NFp) in the request message of the NF is consistent with a stored service type or an authorized service type included in a certificate. If the verification succeeds, the NRF generates the token, and executes a digital signature on the token by using a private key of the NRF, or performs integrity protection on the token by using a message authentication code.

The token includes claims (claims) corresponding to the request, and the claims include an instance ID of the signer NRF, the instance ID of the NFc, the NF type of the NFp, the service name expected by the NFc, a validity period of the token, and the like.

Optionally, the claims may further include other parameters, for example, resources allowed to be used and network slice information.

S430: The NRF sends an authorization token response message to the NFc.

Correspondingly, the NFc receives the authorization token response message from the NRF.

The response message indicates that the NFc is authorized to access the NFp, and the response message includes the authorization token.

Optionally, the response message further includes the validity period of the token, and the token usually can be repeatedly used by the NFc within the validity period.

It should be understood that the NFc may subsequently send a service request to the NFp based on the authorization token. Correspondingly, after check on validity of the token succeeds, the NFp may provide a service for the NFc.

It should be noted that the authorization token obtaining procedure provided above is merely an example for description, and this application is not limited thereto. Other methods and processes that can implement obtaining of the authorization token all fall within the protection scope of this application.

In the NF registration procedure in the method 300, the NRF may perform registration for the NF based on the configuration data of the NF. However, the NRF cannot determine whether software code and a virtualized function of the NF, and an operating system, a virtual machine, a virtual machine hypervisor, and the like that are used by the NF have been maliciously modified or have been attacked by a hacker. Similarly, in the authorization token request procedure in the method 400, the NRF cannot determine whether an NF (for example, the NFc) requesting a service is attacked or whether the NF is secure and trustworthy.

Although remote attestation may be performed on a VNF by deploying a RAS in a 5G system, this implementation is remote attestation at an NFVI layer and an NFV layer, which are isolated and separated from a 3GPP network layer. As a result, the NRF at the network layer still cannot prevent the foregoing potential security risks. This is because the NRF cannot determine, after receiving a registration request message from the NF, whether remote attestation on the NF has been successfully completed, and cannot learn, in time, when the NF has performed remote attestation or whether a remote attestation result is still valid or has been invalid.

For example, an attacker may use a secure and trustworthy NF that has not been tampered with to perform remote attestation. Because the NF on which the remote attestation is performed has not been tampered with, the remote attestation on the NF can be successfully completed. Then, the attacker may use an NF that has been tampered with to send a registration request to the NRF. The NRF cannot determine whether the NF that sends the registration request has been tampered with, and consequently the NF that has been tampered with may also succeed in registration.

For another example, an attacker may attack an NF on which remote attestation has been completed. If the attacker can successfully attack the NF and use the NF to perform malicious operations in a network, the NRF cannot discover the malicious operations. Because remote verification has been performed on the NF before the NF is attacked, the NRF considers that the NF is still a trustworthy NF not attacked.

In summary, a network function NF implemented in a software or virtualization manner faces more potential security risks. Therefore, additional urgent measures need to be taken to prevent and mitigate potential security risks.

In view of this, this application provides a communication method and a network element device, to implement remote attestation on a target NF through cross-layer interaction (between a network layer and an NFV layer/NFVI layer) or cross-plane interaction (between a management plane and a control plane). This ensures that an NF registered at the network layer and an NF authorized to use various services are secure and trustworthy, and mitigates a potential security risk caused by network softwarization and virtualization. To be specific, the method disclosed in this application is intended to enable the network layer to be aware of an attestation result of remote attestation performed on the target NF at a bottom layer (non-network layer) or on the management plane (that is, whether remote attestation on software code, a platform, hardware, and the like has been successfully completed), and ensure that the remote attestation is remote attestation on the target NF and the attestation result of the remote attestation is still valid.

For ease of understanding embodiments of this application, the following descriptions are provided.

In various embodiments of this application, unless otherwise stated or there is a logical conflict, terms and/or descriptions in different embodiments are consistent and may be mutually referenced, and technical features in different embodiments may be combined into a new embodiment based on an internal logical relationship between the technical features.

In embodiments of this application, "at least one" means one or more, and "a plurality of" means two or more. "And/Or" describes an association relationship for describing associated objects and indicates that three relationships may exist. For example, A and/or B may indicate the following cases: Only A exists, both A and B exist, and only B exists. A and B each may be in a singular or plural form. In the descriptions of this application, a character "/" usually indicates an "or" relationship between associated objects. "At least one of the following items (pieces)" or a similar expression thereof means any combination of these items, including a singular item (piece) or any combination of plural items (pieces). For example, at least one item (piece) of a, b, and c may represent a, b, c, a-b, a-c, b-c, or a-b-c, where a, b, and c each may be in a singular or plural form.

In embodiments of this application, "first", "second", and various numerical numbers (for example, "#1" and "#2") are merely used for differentiation for ease of description, but are not intended to limit the scope of embodiments of this application. For example, numerical numbers are used to distinguish between different messages and the like, but are not intended to describe a particular order or sequence. It should be understood that the objects described in this way are interchangeable in a proper circumstance, so that solutions other than embodiments of this application can be described.

In embodiments of this application, descriptions such as "when", "in case of", and "if" all mean that a device performs corresponding processing in an objective situation, are not intended to limit time, do not require that the device should have a determining action during implementation, and do not mean that there are other limitations.

In embodiments of this application, terms "include", "have", and any other variations thereof are intended to cover non-exclusive inclusion. For example, a process, method, system, product, or device that includes a series of steps or units is not necessarily limited to those explicitly listed steps or units, but may include other steps or units that are not explicitly listed or that are inherent to the process, method, product, or device.

In embodiments of this application, "used to indicate" may include "directly indicate" and "indirectly indicate". When a piece of indication information is used to indicate A, the indication information may directly indicate A or indirectly indicate A, but it does not indicate that the indication information definitely carries A.

It should be understood that indication manners in embodiments of this application cover various methods that enable a to-be-indicated party to learn to-be-indicated information. The to-be-indicated information may be sent as a whole, or may be separately sent in a form of a plurality of pieces of sub-information. Sending periods and/or sending occasions of these pieces of sub-information may be identical or different. A specific sending method is not limited in this application.

"Indication information" in embodiments of this application may be an explicit indication, that is, may be directly indicated by using signaling, or may be obtained based on a parameter indicated by using signaling with reference to another rule or another parameter or through derivation; or may be an implicit indication, that is, may be obtained based on a rule or a relationship, or based on another parameter, or through derivation. This is not specifically limited in this application.

In embodiments of this application, a manner of carrying a request message, an indication information, a response message, or the like may be but is not limited to one or a combination of radio resource control signaling and media access control (media access control) signaling. The radio resource control signaling includes radio resource control (radio resource control, RRC) signaling. The media access control signaling includes media access control control element (media access control control element) signaling. Scheduling information may be carried in physical (physical) layer signaling. The physical layer signaling includes downlink control information (downlink control information, DCI) signaling and the like.

"Protocols" in embodiments of this application may be standard protocols in the communication field, and may include, for example, a 5G protocol, a new radio (new radio, NR) protocol, and a related protocol applied to a future communication system. This is not limited in this application. "Preconfiguration" may include predefinition, for example, protocol definition. "Predefinition" may be implemented by prestoring corresponding code or a corresponding table in a device or implemented in another manner that can be used to indicate related information. A specific implementation thereof is not limited in this application.

In embodiments of this application, "storage" may mean storage in one or more memories. The one or more memories may be disposed separately, or may be integrated into an encoder, a decoder, a processor, or a communication apparatus. Alternatively, some of the one or more memories may be disposed separately, and some others may be integrated into a decoder, a processor, or a communication apparatus. A type of the memory may be a storage medium in any form. This is not limited in this application.

In embodiments of this application, "communication" may also be described as "data transmission", "information transmission", "data processing", or the like. "Transmission" includes "sending" and "receiving". This is not limited in this application.

With reference to the accompanying drawings, the following details the technical solutions provided in this application.

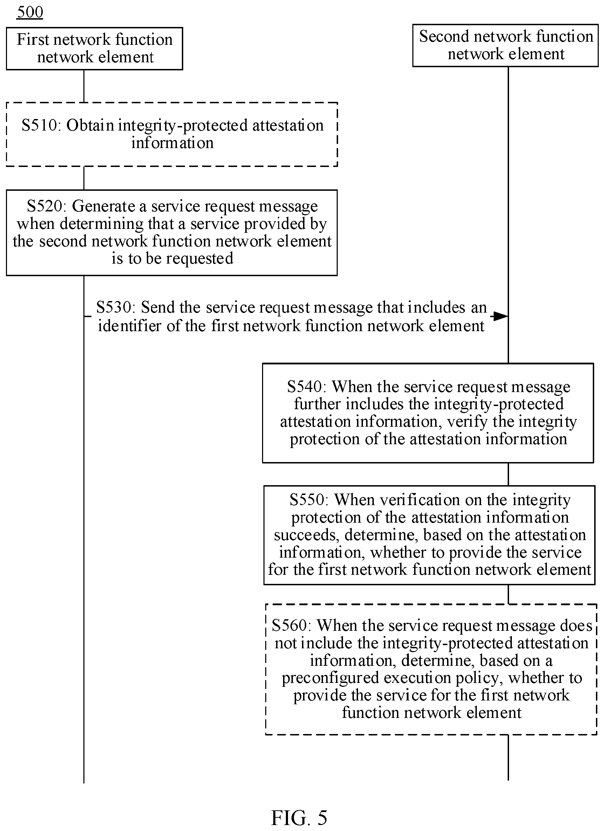

FIG. 5 is a schematic flowchart of a first communication method 500 according to an embodiment of this application. As shown in FIG. 5, the method includes a plurality of steps as follows.

S510: Optionally, a first network function network element obtains integrity-protected attestation information.

The attestation information includes an attestation result and range indication information associated with the attestation result, the attestation result indicates whether the first network function network element is trustworthy, the range indication information indicates a validity range of the attestation result, and the range indication information includes an identifier of the first network function network element.

For example, when a standard version with which the first network function network element complies does not need to include the attestation information, the first network function network element may not perform step S510.

For example, the first network function network element may be an NF service consumer (NF service consumer, NFc) network element, or may be an NF service producer (NF service producer, NFp) network element.

For example, the identifier of the first network function network element may be an NF ID (an identity (identity) or an identifier (identifier)) or an instance (instance) ID of the NF.

For example, that a first network function network element obtains integrity-protected attestation information may be that the first network function network element receives, from an attester (attester) at an RA layer through an internal interface, the integrity-protected attestation information.

It should be understood that in this embodiment of this application, NFs (for example, the NFc, the NFp, and an NRF) are network layer NFs, and signaling exchange between the NFs is only performed at a network layer. The attester (attester) and a verifier RAS in a remote attestation RA procedure are devices at a bottom layer or on a management plane. Signaling exchange between the attester and the verifier is performed only at the bottom layer or on the management plane. For example, a bottom layer corresponding to a network layer NF is the attester, and cross-layer interaction may be implemented between the network layer and the bottom layer through the internal interface and is mainly reflected in parameter transfer.

It should be understood that integrity protection has been performed on the attestation information by the RAS by using a private key or a shared key of the RAS, that is, the attestation information carries a digital signature executed by the RAS by using the private key of the RAS or a MAC generated by using the shared key of the RAS.

Optionally, encrypted protection has been further performed on the attestation information by the RAS by using the private key or the shared key of the RAS. Therefore, the attestation information is invisible to the first network function network element (or the attester). For example, the first network function network element may send indication information to a second network function network element, to indicate that the attestation information has been encrypted.

Optionally, the attestation information further includes a validity deadline Tv of the attestation result.

Optionally, the attestation information further includes a counter value of the attestation result: a quantity of times of performing the RA procedure, a quantity of successful attestation results, a quantity of times of performing the RA procedure for a service request of the first network function network element, or a quantity of obtained attestation results.

Optionally, the range indication information may further include one or more of the following: configuration data (for example, an NF profile) or a part of the configuration data of the first network function network element, or an identifier (for example, an NRF ID) of the second network function network element.

The NF profile includes the NF ID, the instance ID of the NF, an NF type, location information of the NF, a home network identifier PLMN ID of the NF, service authorization information dedicated to the NF, or the like.

Optionally, the range indication information further includes time-validity information of the attestation result, and the time-validity information includes one or more of the following: a generation time of the attestation result; a generation time and validity duration of the attestation result; the validity deadline of the attestation result; or the counter value of the attestation result.

For example, if the validity duration of the attestation result is 12 h, the generation time of the attestation result is 2:30, and a time at which the second network function network element receives the attestation result is 12:30, the second network function network element accepts the service request of the first network function network element.

For example, if the validity deadline of the attestation result is 12:30, and a time at which the second network function network element receives the attestation result is 12:00, the second network function network element accepts the service request of the first network function network element.

For example, the validity deadline of the attestation result is 12:30, a time at which the second network function network element receives the attestation result is 12:00, and the second network function network element sets a specific threshold, for example, 1 h. When a difference between the validity deadline of the attestation result and the time at which the attestation result is received is less than or equal to the specific threshold, the second network function network element may reject the service request in this case.

For example, the second network function network element may compare a counter value counter of the attestation result carried in the attestation information with a counter value that is received last time, to determine whether the counter value falls within a specific range, and then determine whether to provide a service for the first network function network element. For example, if the second network function network element records that the counter value of the attestation result received last time is 10, the second network function network element may accept the service request of the first network function network element when the current counter value is 11, or when the counter value allowed in a specific fault tolerance condition is between 11 and 15 or is greater than 10.

Optionally, the first network function network element sends a remote attestation request to the verifier, where the remote attestation request includes a measurement, and the measurement is used to indicate a running status of the first network function network element. That a first network function network element obtains integrity-protected attestation information is specifically: The first network function network element receives the attestation information from the verifier, where the attestation information is associated with the measurement.

The measurement is a measurement value generated by the first network function network element (the attester (attester)) by collecting a status of a target environment including software and hardware platforms, software, the configuration data, and the like, and running statuses of components of the attester, and performing a hash operation. After performing status measurement on the target environment and a running status of the attester, the attester generates a set of claims referred to as evidence (evidence).

It should be noted that, that the attestation information is associated with the measurement can be understood as follows: The attestation information is determined based on the measurement. Specifically, the attestation information is determined by the verifier (RAS) by comparing the measurement provided by the attester with a reference value generated by the RAS based on an expected status of the attester.

Optionally, the remote attestation request further includes the range indication information. The range indication information includes one or more of the following: the configuration data (for example, an NFc profile) or the part of the configuration data of the first network function network element, the identifier (for example, the NRF ID) of the second network function network element, an NRF address, or the like.

Optionally, the range indication information further includes the time-validity information of the attestation result, and the time-validity information includes the one or more of the following: the generation time of the attestation result; the generation time and the validity duration of the attestation result; the validity deadline of the attestation result; or the counter value of the attestation result.

Optionally, the remote attestation request further includes a freshness parameter. For example, the freshness parameter may include a timestamp, a random number nonce, the counter value, and the like.

Optionally, the freshness parameter is provided by the second network function network element. In a possible implementation, before step S510 is performed, the second network function network element sends the freshness parameter of the second network function network element to the first network function network element. Correspondingly, the first network function network element receives the freshness parameter from the second network function network element.

For example, the second network function network element is the NRF. The freshness parameter may be a random number (for example, a nonce provided by the NRF), a counter value (count) provided by the NRF, a timestamp provided by the NRF, and/or the like.

Optionally, the attestation information is associated with the freshness parameter.

Optionally, the range indication information further includes the freshness parameter.

It should be noted that, that the attestation information is associated with the freshness parameter can be understood as follows: The attestation information (the range indication information) may be bound to the freshness parameter provided by the second network function network element, to provide a network layer parameter that needs to be bound for the remote attestation procedure at the RA layer. The second network function network element may determine, based on the freshness parameter carried in a service request message, that the remote attestation procedure at the RA layer specially responds to remote attestation initiated by the second network function network element. This is more targeted and effective.

S520: The first network function network element generates the service request message when determining that a service provided by the second network function network element is to be requested.

The service request message includes an identifier of the first network function network element.

Optionally, the service request message further includes the integrity-protected attestation information. The attestation information includes the attestation result and the range indication information associated with the attestation result, and the range indication information includes the identifier of the first network function network element.

Optionally, the service request message further includes one or more parameters in the configuration data of the first network function network element.

In a possible implementation, when the service is a registration service, the service request message further includes configuration data of the first network function network element, and the service request message is used to request that the configuration data of the first network function network element be stored.

Optionally, the attestation information further includes a validity period of the attestation result.

In another possible implementation, when the service is an authorization service, the attestation information further includes the validity period of the attestation result, the service request message is used to request to obtain a first token, and the first token is used to authorize the first network function network element to access a service of a third network function network element.

Optionally, the range indication information further includes the time-validity information of the attestation result, and the time-validity information includes the one or more of the following: the generation time of the attestation result; the generation time and the validity duration of the attestation result; the validity deadline of the attestation result; or the counter value of the attestation result.

It should be noted that this embodiment of this application is applicable to a roaming scenario, or is applicable to a non-roaming scenario. This is not specifically limited in this application. In other words, the first network function network element and the third network function network element may belong to a same operator, or may belong to different operators.

S530: The first network function network element sends the service request message to the second network function network element.

Correspondingly, the second network function network element receives the service request message from the first network function network element.

The service request message is used to request the service.

For example, the second network function network element may be the network repository function (network repository function, NRF) network element.

For example, the identifier of the second network function network element may be the NRF ID (an identity (identity) or an identifier (identifier)) or an instance (instance) ID of the NRF.

Optionally, when the attestation result indicates that the first network function network element is trustworthy, the first network function network element sends the service request message to the second network function network element.

Optionally, before sending the service request message, the first network function network element needs to check whether the attestation result has been stored. This can reduce an unnecessary network procedure.

Optionally, before sending the service request message, the first network function network element needs to check whether the attestation result has been stored and whether the RA on the attestation result has been successfully completed. This can reduce an unnecessary network procedure.

S540: When the service request message further includes the integrity-protected attestation information, the second network function network element verifies the integrity protection of the attestation information.

In a possible implementation, the second network function network element preconfigures a public key or the shared key of the verifier, and verifies the integrity protection of the attestation information based on the public key or the shared key of the verifier.

The public key may be used by the second network function network element to check whether the digital signature carried in the received message is generated by the RAS, and the shared key may be used by the second network function network element to check whether the MAC carried in the received message is generated by the RAS, that is, check authenticity of the message with integrity protection performed by the RAS.

For example, if the digital signature is executed by using the private key of the RAS or the MAC is generated by using the shared key of the RAS, when the second network function network element successfully verifies the signature or the MAC by using the stored public key or shared key of the RAS, it indicates that the attestation result has not been tampered with. Otherwise, the verification fails.

S550: When the verification on the integrity protection of the attestation information succeeds, the second network function network element determines, based on the attestation information, whether to provide the service for the first network function network element.

In a possible implementation, when the attestation result indicates that the first network function network element is trustworthy, and the validity range of the attestation result indicates that the attestation result is valid for the first network function network element, the second network function network element determines to provide the service for the first network function network element.

Optionally, the second network function network element determines that the validity range of the attestation result indicates whether the attestation result is valid for the first network function network element.

Optionally, that the second network function network element determines that the validity range of the attestation result indicates whether the attestation result is valid for the first network function network element includes: The second network function network element determines whether the identifier of the first network function network element carried in the range indication information is the same as the identifier of the first network function network element carried in the service request message.

For example, when determining that the identifier of the first network function network element carried in the range indication information is the same as the identifier of the first network function network element carried in the service request message, the second network function network element determines that the validity range of the attestation result indicates that the attestation result is valid for the first network function network element; otherwise, the attestation result is invalid for the first network function network element.

Optionally, when the service is the authorization service, the attestation information further includes the validity period of the attestation result, the service request message is used to request to obtain the first token, and the first token is used to authorize the first network function network element to access the service of the third network function network element.

For example, in a scenario in which the first network function network element (for example, the NFc) and the second network function network element (for example, the NRF) belong to a same operator (for example, a PLMN), the second network function network element generates the first token, and sends the first token and a validity period of the first token to the first network function network element. The validity period of the first token is less than or equal to the validity period of the attestation result.

For example, in a scenario in which the first network function network element (for example, the NFc) and the second network function network element (for example, a vNRF) belong to different operators (for example, an hPLMN and a vPLMN), the second network function network element sends the service request message to a fourth network function network element (for example, an hNRF) in an operator network (for example, the hPLMN) to which the third network function network element (for example, the NFp) belongs, receives the first token and a validity period of the first token from the fourth network function network element (for example, the hNRF), and sends the first token and the validity period of the first token to the first network function network element. The validity period of the first token is less than or equal to the validity period of the attestation result.

Optionally, the second network function network element receives, from the verifier, an integrity-protected notification message, where the notification message indicates to update current configuration information of the second network function network element, and the notification message includes updated configuration information. The second network function network element verifies the integrity protection of the notification message based on the preconfigured public key or the preconfigured shared key of the verifier. When the verification on the integrity protection of the notification message succeeds, the second network function network element stores the updated configuration information.

Optionally, the updated configuration information includes one or more of the following: an updated attestation result, an updated public key or an updated shared key of the verifier, or an updated identifier or updated address information of the verifier.

Optionally, the second network function network element sends a verification request message to a server function network element, where the verification request message includes the attestation information, and the verification request message is used to request to verify the integrity protection of the attestation information. The second network function network element receives a verification result from the server function network element, where the verification result indicates whether the verification on the integrity protection of the attestation information succeeds.

In another possible implementation, the second network function network element may determine, based on an execution policy, to accept or reject the service request of the first network function network element.

Optionally, whether to accept the service request of the first network function network element is determined based on the attestation result being a success or a failure in the remote attestation procedure.

For example, when the attestation result is a success, the service request is accepted; otherwise, the service request is rejected. Alternatively, if a current attestation result is a failure, the second network function network element may temporarily accept the service request, and reject the service request of the first network function network element when a next attestation result is still a failure.

Optionally, whether to accept the service request of the first network function network element is determined based on the validity period carried in the attestation result.

For example, when the attestation result falls within the validity period, the service request is accepted; otherwise, the service request is rejected. Alternatively, if a current attestation result still falls within the validity period, but a remaining time of the validity period is short, the service request is rejected. For example, a threshold is set to 2 hours in advance. When the remaining time of the validity period is less than or equal to the threshold, the service request is rejected. If the remaining time of the validity period of the current attestation result is only one hour, the service request may be rejected in this case.

Optionally, whether to accept the service request of the first network function network element is determined based on the counter value of the attestation result.

For example, when the counter value falls within a specific range, the service request is accepted; otherwise, the service request is rejected. A specific range may be as follows: The counter value is greater than the counter value stored in the second network function network element, the counter value falls within a specific range, or a difference between the counter value and the counter value stored in the second network function network element falls within a specific range.

Optionally, whether to accept the service request of the first network function network element is determined based on network layer NF information carried in the attestation result.

For example, the attestation result needs to be bound to some parameters in the configuration data profile of the first network function network element, or needs to be bound to the identifier of the first network function network element. Further, whether the configuration data of the first network function network element in the service request message is consistent with that in the range indication information is determined through comparison, or whether the identifier of the first network function network element in the service request message is consistent with that in the range indication information. If the information in the service request message is consistent with the information in the range indication information, the service request is accepted; otherwise, the service request is rejected.

Optionally, in S560, when the service request message does not include the integrity-protected attestation information, the second network function network element determines, based on the preconfigured execution policy, whether to provide the service for the first network function network element.

In a possible implementation, the second network function network element rejects provision of the service for the first network function network element; or the second network function network element determines, based on a standard version with which the first network function network element complies, whether to provide the service for the first network function network element.

For example, when the standard version with which the first network function network element complies (for example, 3GPP Release 17, 16, or 15) does not require that remote attestation should be forcibly performed, the service request of the first network function network element is accepted. When the standard version with which the first network function network element complies requires that remote attestation should be forcibly performed, the service request of the first network function network element is rejected.

According to the solution provided in this application, the service request message carries the attestation information, so that authentication on trustworthiness of the first network function network element is enhanced. When determining that the service request message carries the integrity-protected attestation information, the second network function network element verifies the attestation information, and after the verification succeeds, the second network function network element further confirms, based on specific content of the attestation information, whether to provide the service for the first network function network element. In addition, when determining that the service request message does not carry the integrity-protected attestation information, the second network function network element determines, based on the execution policy, whether to provide the service for the first network function network element. The method disclosed in this application can mitigate a potential security risk faced by a network function in a mobile communication network, especially faced by a network function implemented in a software or virtualization manner.

It should be noted that in this embodiment of this application, NFs (for example, the NFc, the NFp, and the NRF) are network layer NFs, and signaling exchange between the NFs is only performed at the network layer. The attester (attester) and the verifier RAS in the remote attestation procedure are devices at the bottom layer or on the management plane. Signaling exchange between the attester and the verifier is performed only at the bottom layer or on the management plane. The bottom layer is an NFV layer and/or an NFVI layer that does not belong to the network layer or an application layer (for example, the NFs shown in FIG. 1 are referred to as NFs at the network layer or the application layer), and is referred to as an RA layer for short. For example, a bottom layer corresponding to a network layer NF is the attester, and cross-layer interaction may be implemented between the network layer and the bottom layer through the internal interface and is mainly reflected in parameter transfer.

The following uses an NF service registration procedure (for example, the NFc requests service registration with the NRF) as an example. By using a remote attestation technology and through cross-layer interaction, the network layer is aware of the attestation result of the remote attestation on the NF performed at the RA layer, to ensure that the NF registered at the network layer is secure and trustworthy. This mitigates a potential security risk caused by network softwarization and virtualization.

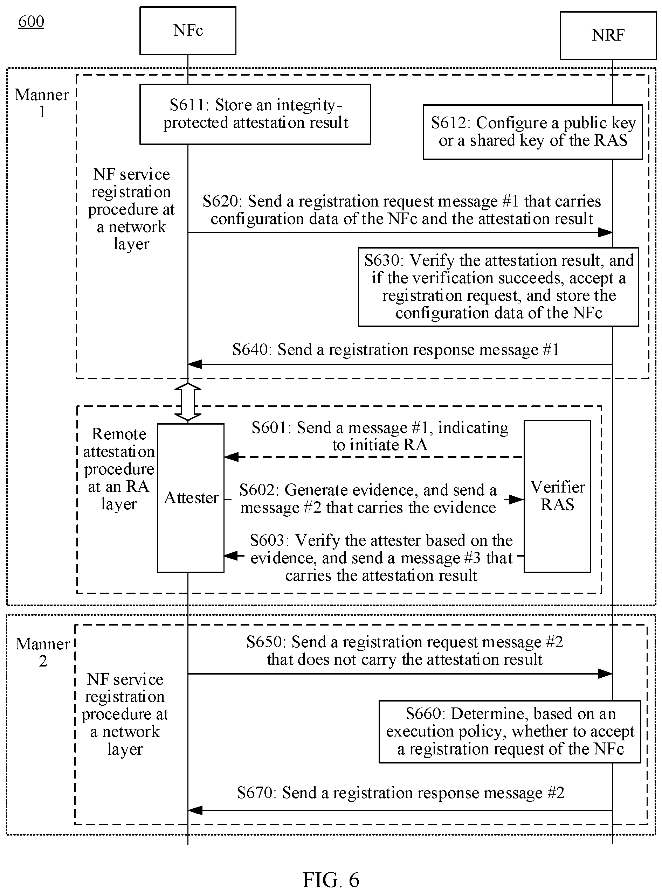

FIG. 6 is a schematic flowchart of a second communication method 600 according to an embodiment of this application. As shown in FIG. 6, the method includes a plurality of steps as follows. Steps S601 to S603 are a remote attestation RA procedure for interaction between an attester (attester) and a RAS (an RA server) at the RA layer. Compared with the method 200, in the method 600, no relying party participates, and the RAS sends an attestation result to the attester instead of a relying party. Steps S611 to S670 are the service registration procedure for interaction between the NFc and the NRF.

S601: Optionally, the RAS sends a message #1 to the attester.

Correspondingly, the attester receives the message #1 from the initiator.

The message #1 is used to initiate the remote attestation procedure at the RA layer.

Optionally, the message #1 may carry parameters associated with remote attestation, for example, a random number and a timestamp.

Optionally, the remote attestation procedure at the RA layer may be initiated by the attester. In this case, step S601 may not be performed.

S602: The attester generates evidence, and sends a message #2 to the RAS.

Correspondingly, the RAS receives the message #2 from the attester.

The message #2 includes the evidence (evidence). The evidence is one or more claims (claims) generated by the attester, and may include measurement values of platforms, software, and the like of the attester, configuration data, and the like.

Optionally, the message #2 further includes a parameter for binding a network layer NF and the RA layer, that is, network layer NF information, used to determine an identity of an NF on which remote attestation has been completed. For example, the network layer NF information may include an NFc ID or an instance ID (instantiated identity (identity) or identifier (identifier)) of the NFc. For another example, the network layer NF information may further include one or more parameters in configuration data of the NF (an NFc profile), and/or an NRF ID.

The configuration data of the NF includes: an instance ID (an unique identifier/identity ID) of the NF, an NF type (for example, an AMF, an SMF, or a UPF), a PLMN ID (a PLMN identifier to which the NF belongs, for example, a PLMN ID), a slice-related identifier (identifier) (for example, a single network slice selection assistance information (single network slice selection assistance information, S-NSSAI) to which the NF belongs, or an NSI ID of a slice instance to which the NF belongs), an IP address or a fully qualified domain name (fully qualified domain name, FQDN), an NF set identifier set ID, an NF service set (service set) ID, and service authorization information dedicated to the NFc, for example, a service supported by the NF, an endpoint (endpoint) address of the service supported by the NF, and location information of the NFc. This is not specifically limited in this application.

It should be understood that the NRF ID is an identifier of the NRF used to identify the NRF with which the NF registers at the network layer, that is, the attestation result is bound to the NRF.

It should be noted that in this embodiment of this application, the RAS belongs to the RA layer, and does not need to be aware of the network layer. Therefore, the RAS does not verify authenticity and trustworthiness of the network layer NF information carried in the message #2, but uses the network layer NF information carried in the message #2 as binding information, that is, attaches the network layer NF information to the attestation result (attestation result) or binds the network layer NF information to the attestation result. The attestation result may also be referred to as an authentication result. This is not specifically limited in this application.

Therefore, the network layer NF information may be considered as a part of the evidence, and the network layer NF information and the evidence may be sent in a same message (for example, the message #2). Alternatively, the network layer NF information may be considered as information independent of the evidence. In this case, the evidence and the network layer NF information may be sent in a same message (for example, the message #2), or may be sent in different messages (for example, the message #2 and a message #4). This is not specifically limited in this application.

S603: The RAS verifies the attester based on the evidence to obtain the attestation result, and sends a message #3 to the attester.

Correspondingly, the attester receives the message #3 from the RAS.

The message #3 includes the attestation result.

Optionally, the attestation result includes the network layer NF information carried in step S602.

Further, the RAS may perform integrity protection on the network layer NF information. For example, a digital signature is executed on the network layer NF information by using a private key of the RAS, or a message authentication code MAC is generated by using a stored shared key of the RAS, and the digital signature or the MAC is sent to the attester together with the network layer NF information.

Optionally, the RAS may further perform encrypted protection on the network layer NF information (and the digital signature or the MAC) by using the private key or the stored shared key of the RAS.

It should be understood that in a specific implementation process, an RA completion time may be further divided. For example, a time at which the RAS generates the attestation result is T11, a time at which the RAS sends the attestation result is T12, a time at which the attester receives the attestation result is T13, and a time at which the attester sends the attestation result from the RA layer to the network layer (the NFc) is T14. For ease of description, these time points are collectively referred to as the RA completion time T1 in this application. Similarly, an RA start time is referred to as T0. In other words, the remote attestation procedure at the RA layer starts at the moment T0 and ends at the moment T1.

Optionally, the message #3 may further include the RA completion time or the time at which the attestation result is sent (for example, T1 or a current timestamp (timestamp)), a validity period of the attestation result, an attestation result counter (a counter of the attestation result) value (count), and the like.

The validity period of the attestation result may represent a validity deadline date or time, or may represent validity duration (that is, how long the attestation result lasts) calculated starting from the beginning, or the like. For ease of description, an example in which the validity period is the validity deadline Tv is used for description in the following description. In addition, each NFc (identified as an NFc ID or an instance ID of the NFc) or each attester (whose ID is an ID of the attester) has a counter of the attestation result. Optionally, the counter of the attestation result may be bound to NRF registration, and is used to record a quantity of times of performing the RA procedure for NRF registration.

For example, the NRF may determine, based on information such as the validity period of the attestation result, the RA completion time, and a timestamp at which the attestation result is received, to accept or reject a registration request of the NFc. For example, if the validity period of the attestation result is 12 h, the RA completion time is 2:30, and the timestamp at which the NRF receives the attestation result is 11:30, the NRF accepts the registration request of the NFc; when the validity period of the attestation result is less than or equal to a specific threshold, for example, 3 h, the NRF may reject the registration request of the NFc; or the like.

It should be noted that in the RA procedure, for a specific implementation in which the attester generates the evidence, the RAS verifies the attester based on the evidence, and the RAS generates the attestation result, refer to the method 200. For brevity, details are not described herein again.

In addition, in this embodiment of this application, the network layer and the network layer NFc do not need to be aware of start of the remote attestation procedure at the RA layer, the moment T0/T1, signaling exchange in the remote attestation procedure at the RA layer, and the like.

It should be noted that an execution moment of the remote attestation procedure at the RA layer is not specifically limited in this application. For example, the NFc performs the remote attestation steps S601 to S603 during instantiation or before going online; or may complete steps S601 to S603 before the following step S620, that is, complete the RA procedure before the NF service registration procedure starts. In this case, the attester may send the attestation result in step S603 to the NFc through an internal interface, and then the network layer NFc stores the attestation result. Alternatively, the NF service registration procedure at the network layer starts to be performed before the remote attestation procedure at the RA layer is completed. In this case, the network layer NFc has not stored the attestation result. The following details the two cases.

Manner 1: The remote attestation procedure at the RA layer is completed before the NF service registration request at the network layer starts. In this case, the network layer NFc has stored the attestation result.

S611: The NFc stores the attestation result.

As described in step S603, integrity protection has been performed on the attestation result by the RAS by using the private key or the shared key of the RAS.

Optionally, encrypted protection has been further performed on the attestation result by the RAS by using the private key or the shared key of the RAS.

In a possible implementation, the attestation result includes the information for binding the network layer NF and the RA layer, that is, network layer NFc information.

S612: The NRF preconfigures a public key or the shared key of the RAS.

The public key may be used by the NRF to check whether the digital signature carried in the received message is generated by the RAS (or the shared key may be used by the NRF to check whether the MAC carried in the received message is generated by the RAS), that is, check authenticity of the message signed by the RAS, to determine whether the message has been tampered with. For a specific configuration manner of the public key or the shared key of the RAS, refer to the conventional technology. Details are not described herein.

S620: The NFc sends a registration request message #1 to the NRF.

Correspondingly, the NRF receives the registration request message #1 from the NFc.

The registration request message #1 includes the NFc profile (for example, identification information of the NFc, the NFc ID, or the instance ID of the NFc) and the attestation result, and the attestation result carries the digital signature executed by the RAS by using the private key of the RAS or the MAC generated by using the shared key of the RAS.

Optionally, the attestation result further includes the validity deadline Tv of the attestation result.

Optionally, the attestation result further includes the counter value (counter) of the attestation result, that is, a quantity of times of performing the RA procedure, a quantity of successful attestation results, a quantity of times of performing the RA procedure for NFc registration, or a quantity of obtained attestation results.

Optionally, the attestation result has been encrypted by the RAS. Therefore, the attestation result is invisible to the NFc or the attester. For example, the NFc may send indication information to the NRF, to indicate that the attestation result has been encrypted.

Optionally, before performing step S620, the NFc needs to check whether the attestation result has been stored. Only the NF that has stored the attestation result can perform step S620. This can reduce an unnecessary network procedure.

Optionally, before performing step S620, the NFc needs to check whether the attestation result has been stored and whether the RA on the attestation result has been successfully completed. Only the NFc whose attestation result is a success can perform step S620. This can reduce an unnecessary network procedure.

S630: The NRF verifies the attestation result, and if the verification succeeds, the NRF accepts the service registration request of the NFc, and stores the configuration data of the NFc.

Specifically, the NRF may verify the attestation result by using the following steps.

Step 1: The NRF verifies, by using the stored public key or shared key of the RAS in step S612, the digital signature or the MAC carried in the received attestation result.

For example, if the digital signature is executed by using the private key of the RAS or the MAC is generated by using the shared key of the RAS, when the NRF successfully verifies the signature or the MAC by using the stored public key or shared key of the RAS, it indicates that the attestation result has not been tampered with. Otherwise, the verification fails, and the NRF may reject registration for the NFc.

It should be understood that the NRF continues to perform service registration verification only after the digital signature or the MAC is verified.

Step 2: The NRF may further verify content information of the attestation result after the verification on the digital signature or the MAC succeeds.

For example, the NRF may determine, through comparison, whether the NF profile in the attestation result or some information in the NF profile is consistent with the information in the NFc profile carried in the registration request message #1 in step S620. Alternatively, whether the NFc ID or the instance ID of the NFc in the attestation result is consistent with the NFc ID or the instance ID of the NFc in the NFc profile received by the NRF. Alternatively, whether the NRF ID in the attestation result is consistent with an ID of the NRF. Alternatively, whether the validity deadline Tv in the attestation result is still valid compared with a current time, or the like.

Optionally, the NRF stores the counter value carried in the attestation result, and the NRF may compare the counter value with a counter value that is received last time, to determine that the counter value (count) falls within a specific range. For example, if the NRF records that the counter value (count) that is of the attestation result and that is received last time is 10, the NRF may accept the service registration request of the NFc when the current counter value is 11, or when the count allowed in a specific fault tolerance condition is between 11 and 15 or is greater than 10.

It should be noted that, after the verification in step 1 and step 2 succeeds, the NRF may accept the service registration request of the NFc, and store the NFc profile. If the verification in step 1 or step 2 fails, the NRF may reject registration for the NFc.

Optionally, if encryption processing has been performed on the attestation result by the RAS, the NRF first decrypts the encrypted information by using the stored public key or shared key of the RAS, before performing the foregoing verification operations (step 1 and step 2).

Optionally, if the registration request message #1 carries encryption indication information, the NRF may perform the decryption operation on the message that carries the encryption indication information. For example, if the RAS has encrypted the attestation result by using the private key of the RAS, the NRF may decrypt the attestation result by using the stored public key of the RAS.

Based on verification results in step 1 and step 2, the NRF may further consider an execution policy related to the RA. For example, the NRF may accept or reject the registration request of the NFc under a specific condition, that is, based on a specific attestation result.

Step 3: The NRF determines, based on the execution policy, to accept or reject the service registration request of the NFc.

Policy 1: The NRF determines, based on successful or failed verification on the attestation result in step S603, whether to accept the registration request of the NFc.

For example, when the attestation result is a success, the NRF accepts the registration request of the NFc; or when the attestation result is a failure, the NRF rejects the registration request of the NFc. Alternatively, when a current attestation result is a failure, the NRF may temporarily accept the registration request of the NFc, and reject the registration request of the NFc when a next attestation result is still a failure.

Policy 2: The NRF determines, based on the validity period carried in the attestation result, whether to accept the registration request of the NFc.

For example, when the attestation result falls within the validity period, the NRF accepts the registration request of the NFc; or when the attestation result does not fall within the validity period, the NRF rejects the registration request of the NFc. Alternatively, if a current attestation result still falls within the validity period, but a remaining time of the validity period is short, the NRF rejects the registration request of the NFc. For example, a threshold is set to 3 hours in advance. When the remaining time of the validity period is less than or equal to the threshold, the NRF rejects the registration request of the NFc. If the remaining time of the validity period of the current attestation result sent by the NFc is only one hour, the NRF may reject the registration request of the NFc in this case.

Optionally, the execution policy may be configured for determining the validity period of the attestation result. For example, the validity period configured by the NRF is a validity period calculated starting from the moment T1 of the attestation result. The NRF determines, based on the configured validity period, whether to accept the registration request of the NFc. The validity period may be different from a validity period that is of the attestation result and that is determined by the RAS.

For example, the execution policy of the NRF is configured as follows: The validity period of the attestation result is valid for 24 hours calculated starting from the moment T1. Although the validity period of the attestation result sent by the NFc has expired (for example, the validity period that is of the attestation result and that is determined by the RAS is T1+1 hours, but a current moment is T1+5 hours), the NRF may determine, based on T1 (that is, the RA completion time) of the attestation result, whether the validity period is valid. To be specific, the current moment T1+5 falls within T1+24 hours, and in this case, the NRF may accept the registration request of the NFc.

Policy 3: The NRF determines, based on the counter value (count) of the attestation result, whether to accept the registration request of the NFc.

For example, when the counter value falls within a specific range, the NRF may accept the registration request of the NFc; otherwise, the NRF rejects the registration request of the NFc. A specific range of the execution policy needs to be determined. For example, the counter value is greater than the counter value stored in the NRF, the counter value falls within a specific range, or a difference between the counter value and the counter value stored in the NRF falls within a specific range.

It should be noted that the counter value stored in the NRF may be a counter value of the attestation result received last time, that is received most recently, or may be configured in another manner (for example, configured by using a management plane during initialization). This is not specifically limited in this application.

Policy 4: The NRF determines, based on the network layer NF information carried in the attestation result, whether to accept the registration request of the NFc.

For example, in the execution policy, it may be required that the attestation result should be bound to a specific parameter in the NFc profile, or the NFc ID or the instance ID of the NFc. Further, refer to the descriptions of determining, through comparison, whether the parameters or some parameters in the NF profiles are consistent or whether the NF IDs or the instance IDs of the NF are consistent in step 2. When results of comparison between the NF profiles, the NF IDs, or the instance IDs of the NF are consistent, the NRF allows NF service registration; otherwise, the NRF rejects registration.

It should be noted that, for the execution policies provided above, all NFs may execute a same policy, or different NFs may execute different policies.

In a possible implementation, the execution policy may be based on an NF type. In other words, different NF types may have different execution policies. For example, when the NF type is an AMF, the policy 1 is executed; or when the NF type is an SMF, the policy 2 is executed.

In another possible implementation, the execution policy may be based on an NF service type. In other words, different NF service types may have different execution policies. For example, the NFc executes the policy 2, and an NFp executes the policy 3.

In still another possible implementation, the execution policy may be based on an NFc ID or an instance ID of the NFc, or based on different NF profiles (some parameters are different). This is not specifically limited in this application.

It should be understood that the implementations of the execution policies provided above are merely examples for description, and should not constitute any limitation on the technical solutions of this application.

Optionally, when the NRF needs to process a time parameter, for example, the validity period, the NRF needs to have a clock, and the clock needs to be synchronized with a clock of the RAS. However, requirements for the clock synchronization are different from those in the remote attestation procedure at the RA layer. Specifically, the RA procedure usually requires accurate clock synchronization, to distinguish between fine-grained time differences in the RA procedure (that is, steps S601 to S603). In this embodiment of this application, the clock of the NRF is synchronized with the clock of the RAS, and is mainly used to check the validity period of the attestation result, that is, the validity duration of the attestation result after the RA procedure ends. The duration is usually longer than that of the RA internal procedure. Therefore, requirements for the clock and clock synchronization accuracy are lower.

Further, a validity period is generated in the RA procedure, and the validity period is a validity period targeted for the RA layer. A validity period used for the network layer may be different from the validity period for the RA layer. To be specific, optionally, in step S603, the message #3 sent by the RAS may include two validity periods: One is the validity period used to indicate the RA layer, and the other is the validity period used to indicate the network layer. The validity period used to indicate the network layer may be stored in the NFc and sent to the NRF. Optionally, according to the description of step S603, the NRF may also configure a validity period, and the configured validity period may be different from the two validity periods in the message #3.

S640: The NRF sends a registration response message #1 to the NFc.

Correspondingly, the NFc receives the registration response message #1 from the NRF.

The registration response message #1 is used to notify the NFc that the registration succeeds (or fails).

For example, the NRF may determine, based on the verification on the attestation result in step S630, whether to accept the registration request of the NFc, and then notify the NFc by using the registration response message #1.

In another possible implementation, the attestation result stored in step S611 does not include network layer NF information for binding.

Specifically, when verifying the attestation result in step S630, the NRF may first perform step 1. To be specific, the NRF verifies, by using the stored public key or shared key of the RAS, the digital signature or the MAC carried in the received attestation result, and determines that the RAS has performed integrity protection on the attestation result and the attestation result has not been tampered with. However, in step 2, because the attestation result does not include the network layer NFc information, the NRF cannot further determine, through comparison, whether remote attestation has been performed on the NFc. In this case, the NRF may reject the registration request of the NFc.

Optionally, after the verification on the attestation result fails, the NRF may further determine, based on the execution policy in step 3, whether to accept the registration request of the NFc. For example, the NRF determines that the attestation result is a failure in step 2, and may still accept the registration request of the NFc. The NRF rejects the registration request of the NFc when a next attestation result is still a failure.

Manner 2: The NF service registration procedure at the network layer starts to be performed before the remote attestation procedure at the RA layer is completed, or the remote attestation procedure at the RA layer is not performed on the network layer NF. In this case, the network layer NFc has not stored the attestation result. For example, before steps S611 to S620 at the network layer are performed, remote attestation at the RA layer has not been completed, and the NF service registration procedure at the network layer can still be normally performed.

S650: The NFc sends a registration request message #2 to the NRF.

Correspondingly, the NRF receives the registration request message #2 from the NFc.

The registration request message #2 includes the configuration data of the NFc (for example, an identifier of the NFc), and does not include the attestation result of the RA layer.

S660: The NRF determines, based on an execution policy, whether to accept the service registration request of the NFc.

In a possible implementation, the NRF rejects the registration request of the NFc based on that the registration request message #2 does not include the attestation result.

In another possible implementation, it is determined, based on a standard version with which the NFc complies, whether to accept the service registration request of the NFc.

For example, when the registration request message #2 does not include the attestation result, the NRF further checks the standard version with which the NFc complies. If the standard version with which the NFc complies (for example, 3GPP Release 17, 16, or 15) does not require that RA should be forcibly performed, the NFc is allowed to continue registration. When the standard version with which the NFc complies requires that RA should be forcibly performed, the NFc registration is rejected.

S670: The NRF sends a registration response message #2 to the NFc.

Correspondingly, the NFc receives the registration response message #2 from the NRF.

The registration response message #2 is used to notify the NFc that the registration succeeds (or fails).

It should be noted that this application is also applicable to a procedure in which the NFp requests service registration with the NRF, provided that the NFc is replaced with the NFp and corresponding adaptation is performed in the registration procedure. For example, the NFp sends a registration request message, the NFc profile is replaced with an NFp profile, and the like. In addition, this application is also applicable to a service communication proxy SCP. The NF may be replaced with an SCP, the NF profile may be replaced with an SCP profile, and the like.

It should be noted that the technical solutions of this application are described by using the NF service registration procedure as an example. However, the technical solutions of this application include but are not limited to the NF service registration procedure, and are also applicable to other procedures, for example, an NF service update (NF service update) procedure, an NF service deregistration (NF service deregistration) procedure, an NF service discovery (NF service discovery) procedure, an NF service status subscribe/notify (NF service status subscribe/notify) procedure, a procedure for binding between an NF service consumer and an NF service provider (binding between NF service consumer and NF service producer), and an NF provisioning (NF provisioning) procedure. Other procedures are not enumerated herein. NFs for interaction may be correspondingly adapted based on different procedures. For example, in the NF provisioning procedure, the NRF may be replaced with a provisioning server (provisioning server), a resource server (resource server), or the like.

In the method disclosed in this application, the service registration procedure triggered by the NF is used as an example. Through cross-layer parameter interaction between the network layer and the RA layer or cross-plane parameter interaction between the management plane and a control plane, the network layer is aware of the attestation result of remote attestation on the NFc performed at the RA layer or on the management plane, and it is ensured that the remote attestation is remote attestation on the NFc. This ensures that the NFc registered at the network layer is secure and trustworthy, and effectively mitigates a security risk caused by virtualization and softwarization. In addition, the network layer actually does not participate in the remote attestation at the RA layer, so that the service registration procedure at the network layer is decoupled from the remote attestation procedure at the RA layer and the control plane is decoupled from the management plane to the utmost. The network layer obtains, sends, or receives the attestation result of the remote attestation at the RA layer, but sensitive information (for example, the evidence (evidence)) used for the remote attestation is not transferred or leaked to the network layer. In other words, the sensitive information is not leaked at the network layer, that is, there is no new security risk of privacy leakage.

In the method 600, the NFc obtains the attestation result before the NFc sends the NF service registration request to the NRF, and the attestation result of the remote attestation may be completed a long time ago. In other words, a time in which the NFc receives the remote attestation and the NFc sends the service registration request (including the attestation result) to the NRF is long. Consequently, a probability that the remote attestation result is maliciously tampered may be increased, and the NFc is no longer secure and trustworthy. In this case, if the NFc continues to request service registration from the NRF and carries the attestation result that has not been tampered with, there is a security risk. In view of this, the following method 700 is proposed to enhance control of an NRF over an execution time of remote attestation, to mitigate a potential risk.

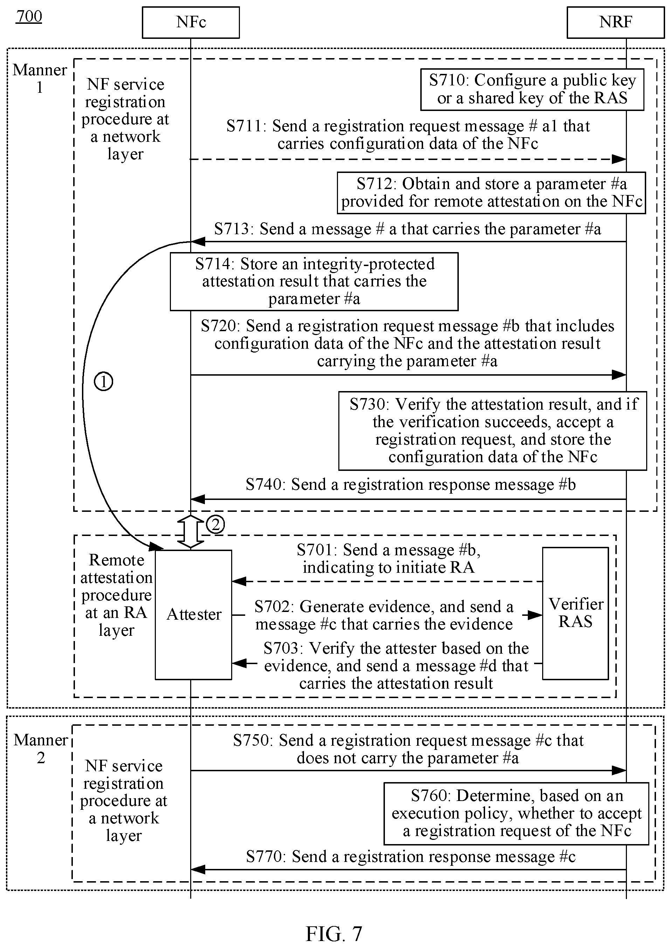

FIG. 7 is a schematic flowchart of a third communication method 700 according to an embodiment of this application. A difference from the method 600 lies in that the NRF in this implementation may provide a parameter for a remote attestation procedure at an RA layer. As shown in FIG. 7, the method includes a plurality of steps as follows.

S710: The NRF preconfigures a public key or a shared key of a RAS.

For a specific implementation, refer to step S612. Details are not described herein again.

S711: Optionally, an NFc sends a registration request message #a1 to the NRF.

Correspondingly, the NRF receives the registration request message #a1 from the NFc.

The registration request message #a1 includes configuration data of the NFc.

Optionally, if the NFc has not stored an attestation result of remote attestation in this case, the registration request message #a1 does not include the attestation result. For descriptions of step S711 and the registration request message #a1 in this case, refer to the descriptions of step S650 and the message #2 in the method 600.

Optionally, if the NFc has stored an attestation result of remote attestation in this case, the registration request message #a1 includes the attestation result. Because steps S712 to S714 in this implementation of this application have not been performed in this case, the attestation result of the remote attestation may be generated based on the method 600 (that is, the NRF has not provided a parameter for the remote attestation). For descriptions of step S711 and the registration request message #a1 in this case, refer to the descriptions of step S620 and the registration request message #1.

S712: The NRF obtains and stores a parameter #a provided for the remote attestation procedure at the RA layer performed for the NFc.

For example, the parameter #a may include a parameter used for binding the RA procedure: an NRF ID (NRF identity or identifier), an instance ID of the NRF, an NRF address, a freshness parameter provided by the NRF (for example, a nonce that is used for binding the RA procedure and that is provided by the NRF (marked as Nonce-NRF in this application), a counter value that is used for binding the RA procedure and that is provided by the NRF (marked as Counter-NRF in this application), and/or a timestamp that is used for binding the RA procedure and that is provided by the NRF (marked as an NRF timestamp in this application)), or the like. The NRF ID and the NRF address are used to distinguish the NRF from another NRF, and the freshness parameter is used to ensure that the remote attestation procedure at the RA layer is specially performed in response to a message #a sent by the NRF in step S713.

Optionally, the parameter #a may further include a parameter associated with the NFc, or some or all of the NFc profile configuration data, for example, an NFc ID, an instance ID of the NFc, or one or more parameters in the NFc profile.

Optionally, the parameter #a is stored in the NRF, or the parameter #a is generated by the NRF.

Optionally, when the registration request message #a1 from the NFc is not received by the NRF (for example, the NFc has not performed step S711), the NRF performs step S712. In this case, the NRF prepares to proactively initiate provision of the parameter for the remote attestation procedure at the RA layer performed for the NFc.

Optionally, that the NRF performs step S712 after receiving the registration request message #a1 from the NFc (for example, the NFc has performed step S711) can be understood as follows: The NRF initiates provision of the parameter for the remote attestation procedure at the RA layer in response to a request of the NFc.

In a possible implementation, the registration request message #a1 does not include the attestation result of the remote attestation.

In another possible implementation, the registration request message #a1 includes the attestation result of the remote attestation, but the NRF has not provided the NFc with the parameter #a needed for the remote attestation procedure, or the attestation result of the remote attestation does not include the parameter #a that is needed for the remote attestation procedure and that is provided by the NRF.

Optionally, after the NRF receives the registration request message #a1 from the NFc in step S711, the NRF may not immediately perform step S712, but perform processing according to the method 600. For example, if the registration request message #a1 does not include the attestation result of the remote attestation, the NRF may perform step S650 in the method 600 (in this case, the message #a1 is equivalent to the message #2). If the registration request message #a1 includes the attestation result of the remote attestation but does not include the parameter provided by the NRF, the NRF may perform step S630 in the method 600. This is not specifically limited in this application.

S713: The NRF sends the message #a to the NFc.

Correspondingly, the NFc receives the message #a from the NRF.

The message #a includes some or all of the parameter #a provided by the network layer NRF, that is, a network layer parameter that needs to be bound for the remote attestation procedure at the RA layer.

Further, after receiving the parameter #a, the NFc sends and stores the parameter #a to the RA layer (an attester) through an internal interface, to perform a subsequent RA procedure at the RA layer (steps S701 to S703).

S701: Optionally, the RAS sends a message #b to the attester.

Correspondingly, the attester receives the message #b from the initiator.

It should be noted that in this implementation, the RAS indicates the attester to initiate the remote attestation procedure at the RA layer. Alternatively, the remote attestation procedure at the RA layer may be initiated by the attester. In this case, step S701 may not be performed.

S702: The attester generates evidence, and sends a message #c to the RAS.

Correspondingly, the RAS receives the message #c from the attester.

The message #c includes the evidence and some or all of the parameter #a provided by the network layer NRF.

In a possible implementation, if the parameter #a includes the NRF timestamp, the message #c also includes the NRF timestamp.

In another possible implementation, if the parameter #a includes the NRF timestamp, a timestamp included in the message #c is a current timestamp at which the attester generates the evidence.

In still another possible implementation, if the parameter #a includes the NRF timestamp, the message #c includes both the foregoing two timestamps: the NRF timestamp and the current timestamp at which the attester generates the evidence. For ease of description, timestamps in these different implementations are collectively referred to as a part of the parameter #a.

Optionally, the parameter #a may be considered as a part of the evidence, and the evidence and the parameter #a may be sent in a same message (for example, the message #c). Alternatively, the parameter #a may not be used as a part of the evidence and is independent of the evidence. In this case, the evidence and the parameter #a may be sent in a same message (for example, the message #c), or may be sent in different messages (for example, the message #c and a message #e). This is not specifically limited in this application.

S703: The RAS verifies the attester based on the evidence to obtain the attestation result, and sends a message #d to the attester.

Correspondingly, the attester receives the message #d from the RAS.

The message #d includes the attestation result and some or all of the parameter #a provided by the network layer NRF.

Further, the RAS may perform integrity protection on the attestation result and the some or all of the parameter #a. For example, a digital signature is executed on the information #d by using a private key of the RAS, or a message authentication code MAC is generated by using the stored shared key of the RAS.

In a possible implementation, if the parameter #a includes the NRF timestamp, the message #d also includes the NRF timestamp.

In another possible implementation, if the parameter #a includes the NRF timestamp, a timestamp included in the message #d is a timestamp that is of a current time and that is generated by the attester.

In still another possible implementation, if the parameter #a includes the NRF timestamp, a timestamp included in the message #d is a timestamp that is of a current time and that is generated by the RAS.

In yet another possible implementation, if the parameter #a includes the NRF timestamp, the message #d includes two or more of the foregoing timestamps. For ease of description, timestamps in these different implementations are collectively referred to as a part of the parameter #a.

It should be noted that, for a specific implementation of steps S701 to S703, refer to steps S601 to S603 in the method 600. For brevity, details are not described herein again. In addition to the foregoing some or all of the parameter #a provided by the network layer NRF, the message #b, the message #c, and the message #d may further include other parameters, for example, a parameter for binding the RA layer and a network layer NF: the NFc ID, the instance ID of the NFc, the NF profile, or the NRF ID. Specific parameter content and meanings thereof are similar to those of the message #1, the message #2, and the message #3 in steps S601 to S603. For brevity, details are not described herein again.

It should be noted that in this embodiment of this application, a network layer procedure and the remote attestation procedure at the RA layer are two relatively independent procedures except for parameter exchange through the NF internal interface. A network layer (for example, the network layer NFc or NRF) does not need to be aware of a specific execution time of the remote attestation at the RA layer. In other words, the execution moment of the remote attestation procedure at the RA layer (relative to an execution time of the network layer procedure) is not specifically limited in this application. For example, the remote attestation procedure at the RA layer (an execution time of step S701) may be performed before the parameter #a is received (that is, step S713), or may be performed after step S713. The following provides detailed descriptions by using the following two cases.

Manner 1: The remote attestation procedure at the RA layer is performed after the NFc receives the parameter #a (that is, step S713). In this case, the messages in step S702 and step S703 include the some or all of the parameter #a provided by the NRF.

S714: The NFc stores the attestation result.

The attestation result includes the some or all of the parameter #a provided by the network layer NRF, and integrity protection has been performed on the attestation result by the RAS by using the private key or the shared key of the RAS.

In a possible implementation, the attestation result further includes the information for binding the network layer NF (for example, the NFc) and the RA layer, that is, network layer NF information for binding.

S720: The NFc sends a registration request message #b to the NRF.

Correspondingly, the NRF receives the registration request message #b from the NFc.

The registration request message #b includes the configuration data of the NFc and the attestation result, and the attestation result carries the parameter #a and the digital signature executed by the RAS by using the private key of the RAS or the MAC generated by using the shared key of the RAS.

S730: The NRF verifies the attestation result, and if the verification succeeds, the NRF accepts a service registration request of the NFc, and stores the configuration data of the NFc.

The NRF may verify the attestation result by using the following steps.

Step 1: The NRF verifies, by using the stored public key of the RAS, the digital signature carried in the received attestation result; or the NRF verifies, by using the stored shared symmetric key of the RAS, the MAC carried in the received attestation result.

Step 2: The NRF may further verify content information of the attestation result after the verification on the digital signature or the MAC succeeds.

Particularly, in comparison with the method 600, the attestation result in this implementation carries the parameter #a provided by the NRF in step S713, for example, the Nonce-NRF, the Counter-NRF, and/or the NRF timestamp. Therefore, the NRF further needs to check the parameter #a.

For example, if the parameter #a in step S712 includes the NRF ID or address information of the NRF, the NRF checks whether the NRF ID and the NRF address that are carried in the attestation result are consistent with those of the NRF.

For example, if the freshness parameter included in the parameter #a in step S712 is the Nonce-NRF or the counter value Counter-NRF, the NRF verifies whether the freshness parameter, namely, the random number Nonce-NRF or the counter value Counter-NRF, is consistent with a freshness parameter, namely, a random number or a counter value sent in step S713.

For example, if the freshness parameter included in the parameter #a in step S712 is the NRF timestamp, according to the foregoing descriptions of different implementations, the timestamp received by the NRF in this case may be one or more of the following: the NRF timestamp, the timestamp generated by the attester, or the timestamp generated by the RAS. For example, if the timestamp received by the NRF includes the NRF timestamp, the NRF checks whether the received NRF timestamp is consistent with the timestamp stored in step S712. For another example, if the timestamp received by the NRF includes the timestamp generated by the attester or RAS, the NRF checks whether the received timestamp generated by the attester or RAS is consistent with the current timestamp of the NRF, or the NRF checks whether a difference falls within an allowed range.

For example, the NRF checks whether the NRF ID and/or the NRF address carried in the attestation result are/is consistent with the ID and/or the address of the NRF. If the NRF ID and/or the NRF address carried in the attestation result are/is consistent with the ID and/or the address of the NRF, the NRF continues to verify the attestation result; otherwise, the NRF directly rejects the service registration request of the NFc. This implementation can improve security, and prevent the NFc from fraudulently using an attestation result obtained based on a parameter provided by another NRF (with a different NRF ID). In addition, the NRF ID and/or the NRF address are/is checked, to prevent resource consumption and a potential denial of service (Denial of Service, DoS) problem caused by an unnecessary further processing process.

For example, the NRF checks whether the attestation result carries a freshness parameter. If the attestation result carries a freshness parameter, and the freshness parameter is consistent with the freshness parameter stored in the NRF in step S712 (for example, the received timestamp is equal to the NRF timestamp provided by the NRF), the NRF accepts the service registration request of the NFc; otherwise, the NRF directly rejects the service registration request of the NFc.

Optionally, when the received timestamp includes the timestamp generated by the attester or the RAS, the NRF may further perform verification based on a configured validity period range of the freshness parameter, for example, 1 h.

For example, the NRF needs to determine whether the difference between the received timestamp generated by the attester or the RAS and the current time of the NRF falls within a specific range, that is, compare the timestamp carried in the attestation result with the current time of the NRF. If the difference exceeds the specific time range, the NRF may reject the service registration request of the NFc. This implementation can ensure time validity of the attestation result, further mitigate a potential security risk, and improve security and trustworthiness of the NFc.

For example, the NRF checks whether a difference between the NRF timestamp provided by the NRF and a timestamp (generated by the attester or the RAS) at which the NRF receives the attestation result falls within a specific time range. If the difference falls within an allowed range, the NRF accepts the service registration request of the NFc; otherwise, the NRF directly rejects the service registration request of the NFc. This implementation can ensure time validity of the attestation result, and further mitigate a security risk.

It should be noted that, after the verification in step 1 and step 2 succeeds, the NRF may accept the service registration request of the NFc, and store the NFc profile. If the verification in step 1 or step 2 fails, the NRF may reject registration for the NFc.

Further, the NRF may store an execution policy related to the RA. For example, the NRF may accept or reject the registration request of the NFc under a specific condition, that is, based on a specific attestation result. In addition, the NRF may further store an RA execution policy associated with the message #a sent in step S713. For example, if the freshness parameter is the NRF timestamp, how long is the attestation result allowed to be received is specified, or the like.

Step 3: The NRF determines, based on the execution policy, to accept or reject the service registration request of the NFc.

It should be noted that the implementation steps 1, 2, and 3 of verifying the attestation result by the NRF are similar to those in step S630 in the method 600. For brevity, details are not described herein again.

S740: The NRF sends a registration response message #b to the NFc.

Correspondingly, the NFc receives the registration response message #b from the NRF.

The registration response message #b is used to notify the NFc that the registration succeeds (or fails).

It should be noted that, for a specific implementation of steps S720 to S740, refer to steps S620 to S640 in the method 600. For brevity, details are not described herein again.

In another possible implementation, the attestation result stored in step S714 does not include network layer NF (for example, the NFc) information for binding.

Optionally, the network layer NF information for binding may be carried in the parameter #a; or the network layer NFc information for binding may be carried in the message #2, which is the same as the case in step S602 in the method 600.

Specifically, when performing verification on the attestation result in step S730, the NRF may determine, by using the stored public key or shared symmetric key of the RAS, that the RAS has performed integrity protection on the attestation result and the attestation result has not been tampered with. However, because the attestation result does not include the network layer NFc information, the NRF cannot further determine, through comparison, whether remote attestation has been performed on the NFc. In this case, the NRF may reject the registration request of the NFc.

Optionally, after the verification on the attestation result fails, the NRF may further determine, based on the execution policy in step 3, whether to accept the registration request of the NFc.

Manner 2: The remote attestation at the RAlayer starts to be performed before the NFc (the attester) receives the parameter #a (that is, step S713). In this case, the messages in step S702 and step S703 do not include the parameter #a provided by the NRF. Therefore, the attestation result stored in step S714 and a message #c sent in step S750 do not include the parameter #a sent by the NRF.

S750: The NFc sends the registration request message #c to the NRF.

Correspondingly, the NRF receives the registration request message #c from the NFc.

The registration request message #c includes the configuration data of the NFc and the attestation result of the RA layer, but does not include the parameter #a provided by the NRF.

S760: The NRF determines, based on an execution policy, whether to accept a service registration request of the NFc.

In a possible implementation, the NRF rejects the registration request of the NFc.

In another possible implementation, the NRF determines, based on the execution policy of the NRF, whether to reject the service registration request of the NFc.

For example, the NRF may choose to wait until the NFc sends a message #c including the parameter #a next time, or the NRF sends a pending indication (for example, pending) to the NFc and waits until the NFc sends a message #c including the parameter #a next time, and then the NRF determines whether to accept or reject the registration request of the NFc.

S770: The NRF sends a registration response message #c to the NFc.

Correspondingly, the NFc receives the registration response message #c from the NRF.

The registration response message #c is used to notify the NFc that the registration succeeds (or fails or is pending).

It should be noted that, for a specific implementation of steps S750 to S770, refer to steps S650 to S670 in the method 600. For brevity, details are not described herein again.

In the method disclosed in this application, the service registration procedure triggered by the NF is used as an example. Through cross-layer parameter interaction between the network layer and the RA layer or cross-plane parameter interaction between a management plane and a control plane, the network layer is aware of the remote attestation on the NFc performed at the RA layer or on the management plane, and it is ensured that the remote attestation is remote attestation on the NFc. In addition, the parameter #a provided by the NRF is carried in the attestation result, to ensure that the NRF can control time validity of the attestation result for the NFc. This further ensures that the NFc registered with the network layer NRF is secure and trustworthy, and effectively mitigates a security risk caused by virtualization and softwarization. The network layer actually does not participate in the remote attestation procedure at the RA layer, so that the service registration procedure at the network layer is decoupled from the remote attestation procedure at the RA layer and the control plane is decoupled from the management plane to the utmost. The network layer configures the public key or shared symmetric key of the RAS to perform integrity protection on the attestation result, ensuring that the attestation result is not tampered with during transmission. The evidence exchanged in the remote attestation procedure is not transferred to the network layer. This can ensure that sensitive information (for example, the evidence) that is at the RA layer and that is used for the remote attestation is not exposed, that is, there is no new security risk of privacy leakage.

It should be noted that the method disclosed in this application is not limited to the service registration procedure triggered by the NF, and the method is also applicable to other network procedures, for example, a procedure for applying for obtaining a token by an NF, an NF service update procedure, an NF service deregistration procedure, an NF service discovery procedure, an NF service status subscribe/notify procedure, a procedure for binding between an NF service consumer and an NF service provider, and an NF provisioning procedure.

The following uses a procedure for applying for obtaining a token by an NF (for example, the NFc applies to the NRF for obtaining a token for accessing a service of an NFp) as an example. By using a remote attestation technology and through cross-layer parameter interaction, the network layer is aware of the attestation result of the remote attestation on the NF performed at the RA layer, to ensure that the NFc authorized to use the service of the NFp is secure and trustworthy. In addition, in consideration of real-time validity of the attestation result, in this implementation, a validity period of the attestation result is added to the attestation result, and the NRF may further determine a validity period of the token based on the validity period of the attestation result, to control time for using the service of the NFp by the NFc. This mitigates a potential security risk caused by network softwarization and virtualization.

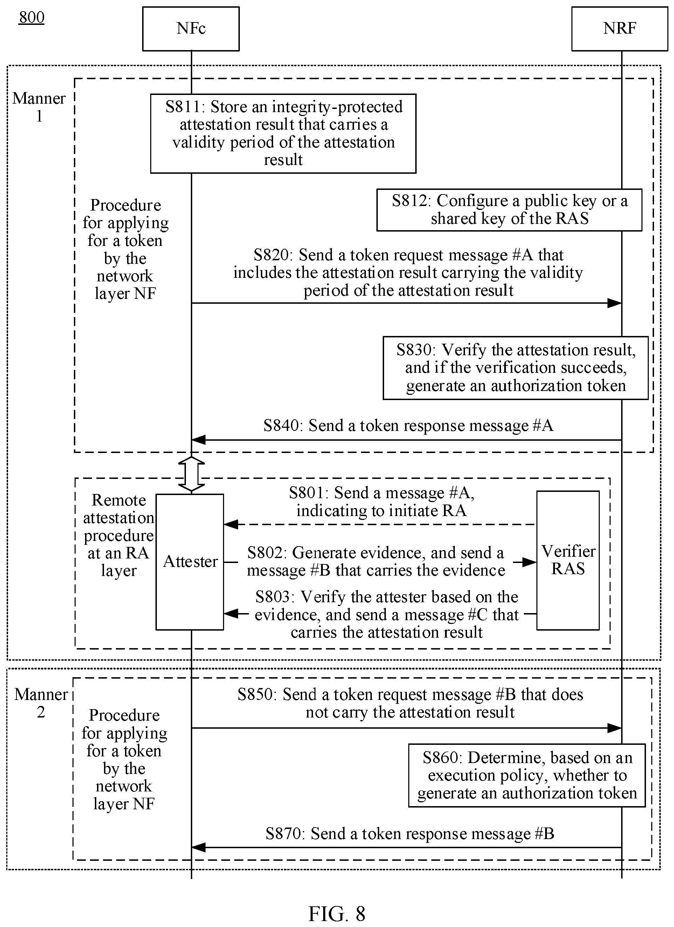

FIG. 8 is a schematic flowchart of a fourth communication method 800 according to an embodiment of this application. The NRF in this implementation may determine the validity period of the token based on the attestation result (for example, the validity period of the attestation result) for the NFc at the RA layer.

It should be noted that, after NFs (for example, the NFc and the NFp) complete service registration with the NRF, the NRF stores authorization information of the NFc and the NFp and profiles of the NFc and the NFp. Before the NFc needs to obtain the service of the NFp, the NFc may further request to obtain, from the NRF, the token for accessing the service of the NFp, so that the NFp allows a service request of the NFc. A method for obtaining the token by the NFc from the NRF is shown in FIG. 8. The method includes a plurality of steps as follows.

S801: Optionally, a RAS sends a message #A to an attester.

Correspondingly, the attester receives the message #A from the initiator.

S802: The attester generates evidence, and sends a message #B to the RAS.

Correspondingly, the RAS receives the message #B from the attester.

S803: The RAS verifies the attester based on the evidence to obtain the attestation result, and sends a message #C to the attester.

Correspondingly, the attester receives the message #C from the RAS.

The message #C includes the attestation result and the validity period of the attestation result.

It should be noted that, for a specific implementation of steps S801 to S803, refer to steps S601 to S603 in the method 600. For brevity, details are not described herein again.

It should be noted that an execution moment of the remote attestation procedure at the RAlayer is not specifically limited in this application. The following provides detailed descriptions by using the following two cases.

Manner 1: The remote attestation procedure at the RA layer is completed before the procedure for applying for the token by the network layer NFc starts. In this case, the network layer NFc has stored the attestation result.

S811: The NFc stores the attestation result.

The attestation result includes the validity period of the attestation result, and integrity protection has been performed on the attestation result by the RAS by using a private key or a shared symmetric key of the RAS.

In a possible implementation, the attestation result includes information for binding the network layer NF (for example, the NFc) and the RA layer, that is, network layer NF information for binding.

S812: The NRF preconfigures a public key of the RAS.

It should be noted that for a specific implementation of steps S811 and S812, refer to steps S611 and S612 in the method 600. An execution sequence of steps S811 and S812 is not limited in this application. For brevity, details are not described herein again.

S820: The NFc sends a token request message #A to the NRF.

Correspondingly, the NRF receives the token request message #A from the NFc.

The token request message #A includes the attestation result, and the attestation result includes the validity period of the attestation result.

Optionally, the token request message #A further includes an instance ID of the NRF, an instance ID of the NFc, an NF type of the NFp, a service name expected by the NFc, the validity period of the token, some or all of configuration data of the NFc, and the like.

S830: The NRF verifies the attestation result, and if the verification succeeds, the NRF generates an authorization token.

For an implementation in which the NRF checks the token request message #A and generates the authorization token, refer to step S420 in the method 400. For a specific implementation in which the NRF verifies the attestation result, refer to step S630 in the method 600. For brevity, details are not described herein again.

Particularly, when the NRF successfully performs the verification and generates the authorization token, the NRF needs to further determine the validity period of the authorization token. For example, the NRF determines the validity period of the authorization token based on the validity period of the attestation result. For example, the validity period of the authorization token is less than the validity period of the attestation result.

S840: The NRF sends a token response message #A to the NFc.

Correspondingly, the NFc receives the token response message #A from the NRF.

The token response message #A is used to authorize the NFc to access the service of the NFp, and the token response message #A includes the validity period of the token.

For example, based on the successful check in step S830, the NRF determines that the authorization token can be generated, and further notifies the NFc by using the token response message #A.

In another possible implementation, the attestation result stored in step S811 does not include network layer NF information for binding.

Specifically, when performing verification on the attestation result in step S830, the NRF may determine, by using the stored public key or shared symmetric key of the RAS, that the RAS has performed integrity protection on the attestation result and the attestation result has not been tampered with. However, because the attestation result does not include the network layer NFc information, the NRF cannot further determine, through comparison, whether remote attestation has been performed on the NFc. In this case, the NRF may rej ect the request of applying for the token by the NFc.

Optionally, after the verification on the attestation result fails, the NRF may further determine, based on the execution policy in step 3, whether to authorize the token request of the NFc. For example, if the NRF determines in step 2 that the attestation result does not include the network layer NFc information, the NRF may temporarily not authorize the token request of the NFc, notify the NFc that the token request of the NFc is in a pending (pending) state and that the NFc needs to resend an attestation result, and determine, based on a next attestation result, to accept or reject the token request of the NFc.

Manner 2: The procedure for applying for the token by the network layer NF starts to be performed before the remote attestation procedure at the RA layer is completed. In this case, the network layer NFc has not stored the attestation result.

S850: The NFc sends a token request message #B to the NRF.

Correspondingly, the NRF receives the token request message #B from the NFc.

The token request message #B includes configuration data of the NFc, and does not include the attestation result of the RA layer.

S860: The NRF determines, based on an execution policy, whether to accept the token request of the NFc.

In a possible implementation, the NRF rejects the token request of the NFc.

In another possible implementation, it is determined, based on a standard version with which the NFc complies, whether to accept the token request of the NFc.

For example, if the standard version with which the NFc complies does not require that RA should be forcibly performed, the token request of the NFc is allowed. When the standard version with which the NFc complies requires that RA should be forcibly performed, the token request of the NFc is rejected.

S870: The NRF sends a token response message #B to the NFc.

Correspondingly, the NFc receives the token response message #B from the NRF.

The token response message #B is used to notify the NFc that the request of applying for the token succeeds (or fails or is pending).

For example, the NRF may determine, based on the verification on the attestation result in step S860, whether to accept the token request of the NFc, and then notify the NFc by using the token response message #B.

It should be noted that the token request procedure in the method 800 may be combined with the service registration request procedure in the method 600, that is, the network layer parameter for binding in the RA procedure may be provided by the NFc. The token request method may be alternatively combined with the service registration request procedure in the method 700, that is, the network layer NF parameter for binding in the RA procedure may be provided by the NRF. Therefore, for specific implementations that are not described in the steps in the method 800, refer to the method 600 or 700. For brevity, details are not described herein again.

In the method disclosed in this application, the procedure for applying for the token by the NFc is used as an example. Through cross-layer parameter interaction between the network layer and the RA layer or cross-plane parameter interaction between a management plane and a control plane, the network layer is aware of the attestation result of remote attestation on the NFc performed at the RA layer or on the management plane, and it is ensured that the remote attestation is remote attestation on the NFc. This ensures that the NFc authorized to use various services at the network layer is secure and trustworthy, and effectively mitigates a security risk caused by virtualization and softwarization. The validity period of the attestation result is carried in the attestation result, so that the NRF checks and determines the validity period of the token on a basis, and ensures that the NFc that applies for the token at the network layer is secure and trustworthy, thereby effectively mitigating a security risk caused by virtualization and softwarization. In addition, the network layer actually does not participate in the remote attestation procedure at the RA layer, that is, S801 to S803, so that the procedure for applying for the token at the network layer is decoupled from the remote attestation procedure at the RA layer and the control plane is decoupled from the management plane to the utmost. The network layer configures the public key or shared symmetric key of the RAS to perform integrity protection on the attestation result, ensuring that the attestation result is not tampered with during transmission. The evidence exchanged in the remote attestation procedure is not transferred to the network layer. This ensures that sensitive information that is at the RA layer and that is used for the remote attestation is not exposed, that is, there is no new security risk of privacy leakage.

It should be understood that the method 800 is applicable to a scenario in which the NFc and the NRF belong to a same operator network PLMN. The following method 900 describes how an NF applies for a token in a roaming scenario (for example, an NFc and an NRF belong to different PLMNs).

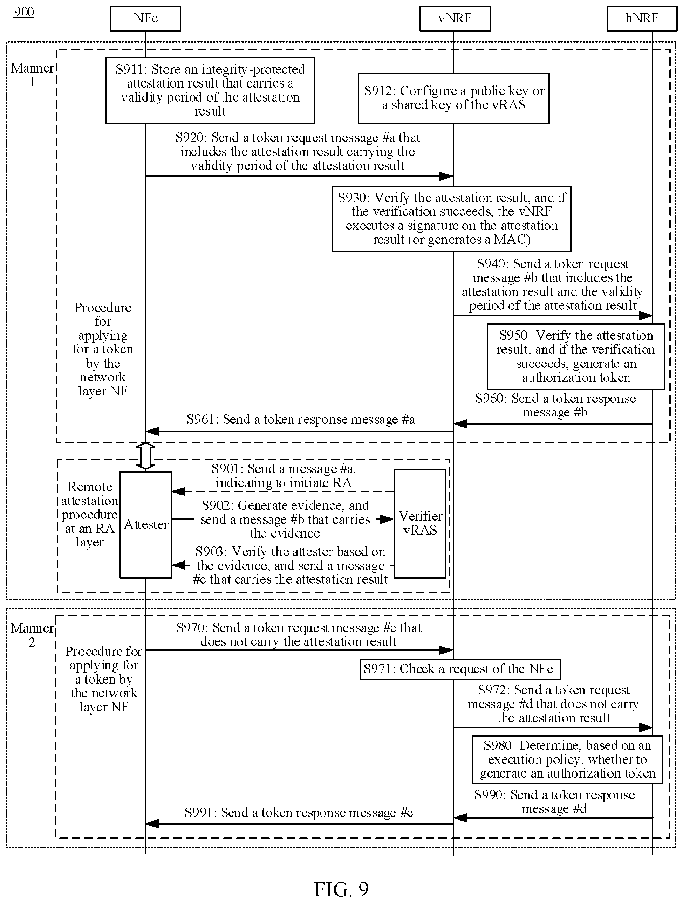

FIG. 9 is a schematic flowchart of a fifth communication method 900 according to an embodiment of this application. As shown in FIG. 9, the method includes a plurality of steps as follows.

For example, it is assumed that the NFc belongs to a visited network (visited PLMN, vPLMN), and a final authorization server of the NFc is the NRF (an hNRF) in a home network (home PLMN, hPLMN). For example, when UE roams to the vPLMN and the UE is to obtain a service of an NFp in the hPLMN, an NF (the NFc) in the vPLMN needs to obtain authorization from the hPLMN, that is, the NF needs to obtain authorization from the NRF (the hNRF) in the hPLMN or a token issued by the NRF (the hNRF).

It should be noted that, in this case, the NF does not directly interact with the hNRF, but an NRF (that is, a vNRF) in the roaming network performs forwarding. Due to the two PLMNs, there are two possible implementations of performing a remote attestation RA procedure, that is, a RAS server belongs to the vPLMN or the hPLMN. For ease of network evolution, that the RAS is located in the vPLMN is used as an example for description in this embodiment of this application. In other words, RA is performed between an attester and the RAS (a vRAS) in the vPLMN. This implementation is more appropriate, and has a slight modification to an existing network, an existing network protocol, and a network layer procedure.

S901: Optionally, the vRAS sends a message #a to the attester.

Correspondingly, the attester receives the message #a from the initiator.

S902: The attester generates evidence, and sends a message #b to the vRAS.

Correspondingly, the vRAS receives the message #b from the attester.

S903: The vRAS verifies the attester based on the evidence to obtain an attestation result, and sends a message #c to the attester.

Correspondingly, the attester receives the message #c from the vRAS.

The message #c includes the attestation result and a validity period of the attestation result.

It should be noted that, for a specific implementation of steps S901 to S903, refer to steps S801 to S803 in the method 800. For brevity, details are not described herein again.

It should be noted that an execution moment of the remote attestation procedure at the RAlayer is not specifically limited in this application. The following provides detailed descriptions by using the following two cases.

Manner 1: The remote attestation procedure at the RA layer is completed before the procedure for applying for the token by the network layer NFc starts. In this case, the network layer NFc has stored the attestation result.

S911: The NFc stores the attestation result.

The attestation result includes the validity period of the attestation result, and integrity protection has been performed on the attestation result by the vRAS by using a private key or a shared symmetric key of the vRAS.

In a possible implementation, the attestation result includes information for binding the network layer NF and the RA layer, that is, network layer NF information for binding.

S912: The vNRF preconfigures a public key or the shared key of the vRAS.

It should be noted that for a specific implementation of steps S911 and S912, refer to steps S611 and S612 in the method 600. A sequence of steps S911 and S912 is not limited in this application. For brevity, details are not described herein again.

S920: The NFc sends a token request message #a to the vNRF.

Correspondingly, the vNRF receives the token request message #a from the NFc.

The token request message #a includes the attestation result, the attestation result includes the validity period of the attestation result, and a digital signature on the attestation result is executed by the vRAS by using the private key (a MAC is generated by using the shared key).

Optionally, the token request message #a further includes some or all of configuration data of the NFc, for example, an NFc ID.

S930: The vNRF verifies the attestation result.

Optionally, if the verification succeeds, the vNRF performs integrity protection on the attestation result (by using the digital signature or the MAC).

Optionally, if the verification succeeds, the vNRF generates indication information of the attestation result. The indication information indicates whether the attestation result is a success or a failure, and further includes the validity period of the attestation result. Further, the NRF performs integrity protection on the indication information (executes the digital signature by using a private key of the vNRF or generates the MAC by using a key shared with the hNRF).

For an implementation in which the vNRF checks the token request message #a and generates an authorization token, refer to step S420 in the method 400. For a specific implementation in which the vNRF verifies the attestation result, refer to step S830 in the method 800. For brevity, details are not described herein again.

It should be understood that in this case, the vNRF does not generate the token requested by the NFc.

Optionally, the signature (or the MAC) of the vRAS in the attestation result may be replaced with the signature (or the MAC) of the vNRF.

Optionally, the signature (or the MAC) of the vRAS in the attestation result is retained, and the signature (or the MAC) of the vNRF is newly added.

S940: The vNRF sends a token request message #b to the hNRF.

Correspondingly, the hNRF receives the token request message #b from the vNRF.

Optionally, the token request message #b includes the attestation result, and the attestation result includes the validity period of the attestation result.

Optionally, the token request message #b includes the attestation result signed by the vNRF and/or the vRAS (or for which the MAC has been generated for integrity protection).

Optionally, based on the successful check by the vNRF on a request of the NFc in step S930, the vNRF may add indication information to the token request message #b to indicate that the vNRF successfully verifies the attestation result, but the token request message #b does not carry the attestation result. Optionally, the indication information further includes the validity period of the attestation result.

Optionally, the vNRF may perform integrity protection on the indication information (execute the digital signature by the vNRF or generate the MAC).

S950: The hNRF verifies the attestation result, and if the verification succeeds, the hNRF generates an authorization token.

For example, for a specific implementation in which if the token request message #b carries the attestation result, the hNRF verifies the attestation result and generates the authorization token, refer to step S830 in the method 800. For brevity, details are not described herein again. If the token request message #b carries the indication information but does not carry the attestation result, the hNRF may generate the authorization token based on the indication information.

Particularly, when the hNRF successfully performs the verification and generates the authorization token, the hNRF needs to further determine a validity period of the token. For example, the hNRF determines the validity period of the token based on the validity period of the attestation result (including the attestation result or the indication information). For example, the validity period of the token is less than the validity period of the attestation result.

S960: The hNRF sends a token response message #b to the vNRF.

Correspondingly, the vNRF receives the response message #b from the hNRF.

S961: The vNRF sends a token response message #a to the NFc.

Correspondingly, the NFc receives the response message #a from the vNRF.

The token response message #a and the token response message #b are used to notify whether to accept the token request of the NFc, and both the token response message #a and the token response message #b include the generated token and the validity period of the token.

In another possible implementation, the attestation result stored in step S911 does not include network layer NF information for binding.

For example, when performing verification on the attestation result in step S930, the vNRF may determine, by using the stored public key of the vRAS, that the vRAS has performed integrity protection on the attestation result and the attestation result has not been tampered with. However, because the attestation result does not include the network layer NFc information, the vNRF cannot further determine, through comparison, whether remote attestation has been performed on the NFc. In this case, the vNRF may reject the token request.

Manner 2: The procedure for applying for the token by the network layer NF starts to be performed before the remote attestation procedure at the RA layer is completed. In this case, the network layer NFc has not stored the attestation result.

S970: The NFc sends a token request message #c to the vNRF.

Correspondingly, the vNRF receives the token request message #c from the NFc.

The token request message #c includes configuration data of the NFc, and does not include the attestation result of the RA layer.

S971: The vNRF checks a request of the NFc.

In a possible implementation, because the token request message #c does not include the attestation result of the RA layer, the vNRF rejects the token request of the NFc.

In another possible implementation, it is determined, based on a standard version with which the NFc complies, whether to accept the token request of the NFc.

For example, if the standard version with which the NFc complies does not require that RA should be forcibly performed, the vNRF performs step S972. When the standard version with which the NFc complies requires that RA should be forcibly performed, the vNRF rej ects the token request of the NFc.

S972: The vNRF sends a token request message #d to the hNRF.

Correspondingly, the hNRF receives the token request message #d from the vNRF.

The token request message #d includes the configuration data of the NFc, and does not include the attestation result of the RA layer.

S980: The hNRF determines, based on an execution policy, whether to generate a token.

In a possible implementation, the hNRF rejects the token request of the NFc.

In another possible implementation, the hNRF may perform determining based on the standard version with which the NFc complies. For example, if the standard version with which the NF complies does not require that RA should be forcibly performed, the hNRF accepts the token request of the NFc, and generates the token. When the standard version with which the NFc complies requires that RA should be forcibly performed, the hNRF rejects the token request of the NFc.

S990: The hNRF sends a token response message #d to the vNRF.

Correspondingly, the vNRF receives the response message #d from the hNRF.

S991: The vNRF sends a token response message #c to the NFc.

Correspondingly, the NFc receives the response message #c from the vNRF.

The token response message #c and the token response message #d are used to notify acceptance or rejection of the request of applying for the token by the NFc. If the token request is accepted, both the token response message #c and the token response message #d include the token and the validity period of the token.

In the method disclosed in this application, the procedure for applying for the token by the NFc in the roaming scenario is used as an example. Through cross-layer parameter interaction between a network layer and the RA layer or cross-plane parameter interaction between a management plane and a control plane, the network layer is aware of the attestation result of remote attestation on the NFc performed at the RA layer or on the management plane, and it is ensured that the remote attestation is remote attestation on the NFc. This ensures that the NFc authorized to use various services at the network layer is secure and trustworthy, and effectively mitigates a security risk caused by virtualization and softwarization. Moreover, for ease of network evolution, in this application, based on an existing standardized system and procedure, the network layer is aware of the attestation result, and an existing network and network protocol are slightly modified as much as possible. In addition, the network layer actually does not participate in the remote attestation at the RA layer, so that the procedure for applying for the token at the network layer is decoupled from the remote attestation procedure at the RAlayer and the control plane is decoupled from the management plane to the utmost.

Considering that the NRF is a network layer function, in the foregoing methods, the NRF does not directly interact with the RA layer. For example, in the method 700, the parameter #a of the NRF is sent to the RAS by using the RA layer (the attester) corresponding to the NFc. In addition, configuration information of the NRF is usually configured by a manager of an operator network PLMN, for example, configured by using an operations, administration, and maintenance (operations, administration, and maintenance, OAM) system on a management plane.

Optionally, the NRF may also be configured with an internal interface to interact with the RA layer. The following uses the configuration information of the NRF as an example to implement interaction between the NRF and the RA layer. To be specific, the NRF obtains the configuration information from the RAS at the RA layer and updates the configuration information of the NRF.

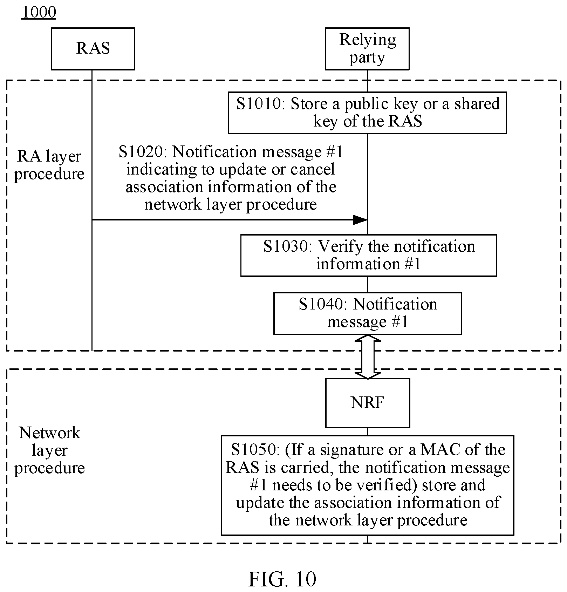

FIG. 10 is a schematic flowchart of a sixth communication method 1000 according to an embodiment of this application. In this implementation, the configuration information of the NRF is used as an example for description. A difference from the methods 600 to 900 lies in that the NRF in this implementation may obtain the configuration information from the RAS at the RA layer and update the configuration information. As shown in FIG. 10, the method includes a plurality of steps as follows.

S1010: A relying party preconfigures and stores a public key or a shared key of the RAS.

It should be noted that the NRF acts as a relying party at the RA layer. At the RA layer, the relying party configures the public key of the RAS, so that the relying party can receive and verify RAS messages.

S1020: The RAS sends a notification message #1 to the relying party.

Correspondingly, the relying party receives the notification information #1 from the RAS.

The notification message #1 notifies of updating or canceling association information of a network layer procedure. The notification message #1 may include association information that is of the network layer procedure and that needs to be updated or canceled, and updated association information of the network layer procedure.

For example, the association information of the network layer procedure may include an RA attestation result for the NF, the public key of the RAS, a RAS ID, address information of the RAS, or the like.

It should be understood that the updated association information of the network layer procedure may be used to verify an update message of the RAS. For example, an updated public key in the association message is used to verify a message that is sent by the RAS and that indicates that integrity protection (a digital signature or generation of a MAC) has been performed by the RAS. For another example, the RAS ID or the RAS address in the association message is used to notify the NRF that a parameter that needs to be verified includes the RAS ID or the RAS address. For still another example, an updated attestation result (for example, a revocation result) in the association message indicates that a previous attestation result for the NRF is no longer valid.

For example, based on the attestation result on which verification has been successfully performed in the methods 600 to 900, when the RAS needs to update the association information of the network layer procedure, the RAS sends the notification message #1 to the relying party.

S1030: The relying party verifies the notification information #1.

For example, the relying party performs, by using the public key or the shared key of the RAS, integrity check on the association information of the network layer procedure carried in the notification information #1. For example, the relying party may verify whether the digital signature for the notification information #1 is correct or has been tampered with.

S1040: The relying party transfers the notification information #1 to the network layer NRF through the internal interface.

It should be understood that, after the verification on the notification information #1 succeeds, it is determined that the digital signature or the MAC for the notification information #1 is correct and has not been tampered with. The relying party may send the notification message #1 to the NRF through the internal interface.

Optionally, the notification message #1 that may be sent by the relying party to the NRF may carry the signature or the MAC of the RAS.

S1050: The NRF stores and updates the association information of the network layer procedure based on the notification message #1.

Optionally, if the notification information #1 sent by the relying party includes the public key of the RAS, the NRF needs to store or update, at the network layer, the public key of the RAS. The public key or the shared key of the RAS is used to verify the received notification message #1.

It should be understood that the configuration information of the NRF is usually configured by the operator PLMN, for example, configured by using the operations, administration, and management OAM system on the management plane.

It should be noted that in this implementation, a role of the RA layer corresponding to the network layer NRF is added, that is, the relying party (relying party) is added. The internal interface is disposed between the NRF and the relying party, so that the RA layer can transfer information to the NRF (the network layer). The RAS at the RA layer may preconfigure a policy. When there is information related to the relying party, the RAS may send the information to the relying party.

It should be noted that the method 1000 is also applicable to the methods 600 to 900. To be specific, that the NRF may obtain the configuration information from the RAS at the RA layer and update the configuration information is also applicable to the NF service registration procedure and the procedure for applying for the token by the NF. This is not specifically limited in this application.

In the method disclosed in this application, the configuration information of the NRF is used as an example. Through cross-layer parameter transfer between the network layer NRF and the RA layer (the RAS and the relying party) or cross-plane parameter transfer between the management plane and a control plane, the network layer is aware of information transferred by the RA layer or the management plane. Sensitive information included in evidence at the RA layer is not leaked to the network layer, and in this case, there is no new security risk of privacy leakage. This effectively mitigates a security risk caused by virtualization and softwarization.

It should be understood that in the foregoing methods, the service registration request of the NFc or the request of applying for the token is performed based on the public key of the RAS configured by the NRF, to check authenticity of integrity protection performed by using the private key of the RAS. In this case, an existing function of the NRF needs to be modified. In an implementation, an NF registration procedure in which a public key server is deployed is used as an example, and the public key of the RAS is configured on another server function network element, for example, a verification server function (verification server function, VSF). In this way, logic of the NRF can be simplified, and modifications to an existing standardized system and procedure, and a network function (for example, the NRF) can be avoided as much as possible.

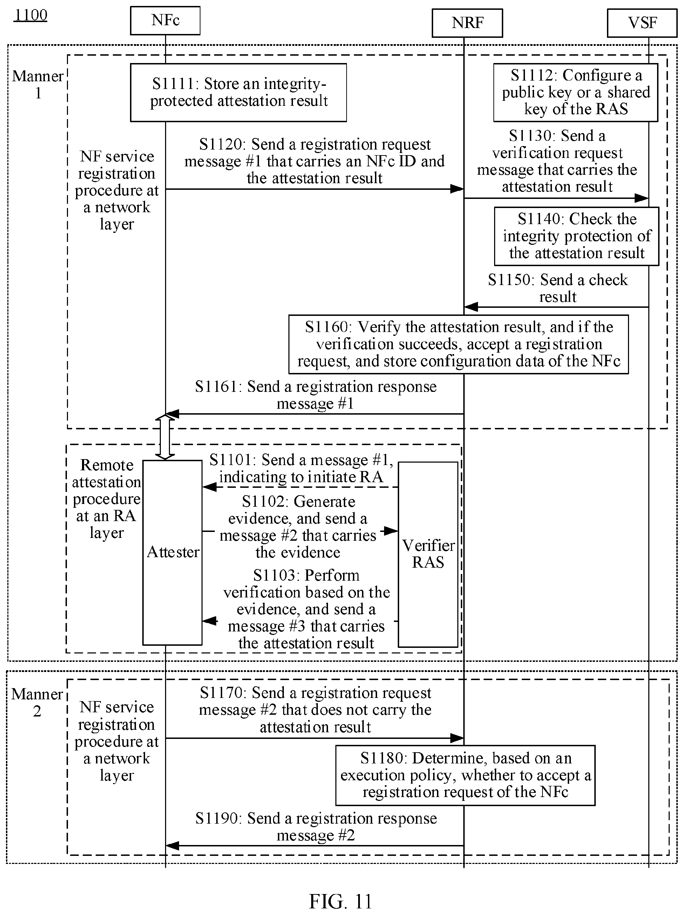

FIG. 11 is a schematic flowchart of a seventh communication method 1100 according to an embodiment of this application. In this implementation, the NF registration procedure in which the public key server is deployed is used as an example for description. A difference from the methods 600 to 1000 lies in that the NRF in this implementation does not configure the public key of the RAS, and the public key of the RAS may be configured by another network function (for example, the VSF). As shown in FIG. 11, the method includes a plurality of steps as follows.

S1101: Optionally, the RAS sends a message #1 to an attester.

Correspondingly, the attester receives the message #1 from the RAS.

S1102: The attester generates evidence, and sends a message #2 to the RAS.

Correspondingly, the RAS receives the message #2 from the attester.

S1103: The RAS verifies the attester based on the evidence to obtain an attestation result, and sends a message #3 to the attester.

Correspondingly, the attester receives the message #3 from the RAS.

It should be noted that, for a specific implementation of steps S1101 to S1103, refer to steps S601 to S603 in the method 600. For brevity, details are not described herein again.

It should be noted that an execution moment of the remote attestation procedure at the RAlayer is not specifically limited in this application. The following provides detailed descriptions by using the following two cases.

Manner 1: The remote attestation procedure at the RA layer is completed before an NF service registration request at a network layer starts. In this case, a network layer NFc has stored the attestation result.

S1111: The NFc stores the attestation result.

Integrity protection has been performed on the attestation result by the RAS by using a private key or a shared symmetric key of the RAS.

In a possible implementation, the attestation result includes information for binding the network layer NF and the RA layer, that is, network layer NF information for binding.

S1112: The VSF preconfigures the public key or the shared key of the RAS.

The public key or the shared key may be used to verify whether a signature or a MAC carried in a message received by the VSF is generated by the RAS.

S1120: The NFc sends a registration request message #1 to the NRF.

Correspondingly, the NRF receives the registration request message #1 from the NFc.

The registration request message #1 includes configuration data of the NFc (for example, an NFc ID) and the attestation result, and the attestation result carries the digital signature executed by the RAS by using the private key of the RAS or the MAC generated by using the shared key of the RAS.

Optionally, the registration request message #1 includes indication information, indicating that the attestation result is carried, or indicating that the attestation result needs to be verified by the VSF.

Optionally, the indication information includes identification information of the VSF that performs verification, for example, information such as a VSF ID or a VSF address.

S1130: The NRF sends a verification request message to the VSF.

Correspondingly, the VSF receives the verification request message from the NRF.

The verification request message is used to request the VSF to verify the attestation result, and the verification request message includes the attestation result with integrity protection performed by the RAS.

Optionally, the verification request message includes verification indication information, indicating that the NRF needs to send the attestation result to the VSF for verification. If the verification request message carries an ID of a target VSF or address information of the VSF, the NRF sends the attestation result to the target VSF for verification.

S1140: The VSF checks the integrity protection of the attestation result.

For a specific manner in which the VSF checks the integrity protection of the attestation result, refer to step S630 in the method 600. For example, the VSF checks the integrity protection of the attestation result based on the stored public key or shared key or the RAS, that is, checks whether the digital signature on the attestation result is executed by using the private key of the RAS or the MAC for the attestation result is generated by using the shared key of the RAS.

S1150: The VSF sends a check result to the NRF.

Correspondingly, the NRF receives the check result from the VSF.

It should be understood that the check result may be that the attestation result is authentic and trustworthy, or may be that the attestation result is unauthentic and untrustworthy, has expired, has been tampered with, or the like.

Optionally, the VSF performs integrity protection on the attestation result. For example, the VSF signs the attestation result by using a private key.

In a possible implementation, the VSF sends the checked attestation result to the NRF.

In another possible implementation, the VSF sends the checked attestation result to the NRF, and sends indication information to indicate whether the attestation result is authentic (for example, the attestation result with integrity protection performed by the RAS is verified by using the public key of the RAS, and the attestation result is authentic if the verification succeeds). This is because the NRF has received the attestation result in step S1120, and the attestation result does not need to be sent again, to reduce occupied network resources.

In still another possible implementation, if encryption processing has been performed on the attestation result by the RAS, the VSF sends the checked attestation result to the NRF. Although the NRF has received the attestation result in step S1120, the NRF cannot decrypt the attestation result. Therefore, the VSF needs to send the decrypted attestation result to the NRF.

S1160: The NRF verifies the attestation result, and if the verification succeeds, the NRF accepts the service registration request of the NFc, and stores the configuration data of the NFc.

Specifically, for a specific implementation in which the NRF verifies the attestation result, refer to step S630 in the method 600. For brevity, details are not described herein again.

It should be noted that in a possible implementation, the step of verifying the attestation result by the NRF in step S1160 may be alternatively performed by the VSF in step S1140. In this implementation, the NRF needs to send, to the VSF in step S1130, all information (for example, an NF profile) needed by the registration request, and then the VSF verifies the attestation result. If the verification succeeds, the NRF is notified in step S1160 that the verification succeeds, and the NRF stores the successfully verified NF profile. Otherwise, if the verification fails, the NRF does not store the NF profile and does not accept the registration request.

S1161: The NRF sends a registration response message #1 to the NFc.

Correspondingly, the NFc receives the registration response message #1 from the NRF.

The registration response message #1 is used to notify the NFc that the registration succeeds (or fails). For a specific implementation in which the NRF sends the registration response message #1, refer to step S640 in the method 600. For brevity, details are not described herein again.

In another possible implementation, the attestation result stored in step S1111 does not include network layer NF information for binding.

Specifically, when the NRF verifies the attestation result in step S1160, because the attestation result does not include the network layer NFc information, the NRF cannot further determine, through comparison, whether remote attestation has been performed on the NFc. In this case, the NRF may reject the registration request of the NFc.

Optionally, after the verification on the attestation result fails, the NRF may further determine, based on the execution policy in step 3 in the method 600, whether to accept the registration request of the NFc.

Manner 2: An NF service registration procedure at a network layer starts to be performed before the remote attestation procedure at the RA layer is completed. In this case, a network layer NFc has not stored the attestation result.

S1170: The NFc sends a registration request message #2 to the NRF.

Correspondingly, the NRF receives the registration request message #2 from the NFc.

The registration request message #2 includes configuration data of the NFc, and does not include the attestation result of the RA layer.

S1180: The NRF determines, based on an execution policy, whether to accept a service registration request of the NFc.

S1190: The NRF sends a registration response message #2 to the NFc.

Correspondingly, the NFc receives the registration response message #2 from the NRF.

The registration response message #2 is used to notify the NFc that the registration succeeds (or fails).

It should be noted that this implementation can be understood as a further extension of the NF registration procedure in the method 600. Therefore, for a specific implementation of the foregoing steps (for example, S1111 to S1120, S1160 to S1190, and S1101 to S103), refer to the method 600. For brevity, details are not described again.

It should be understood that the verification server function VSF is merely an example for description, and a network function that configures the public key of the RAS or a network function that verifies the attestation result is not specifically limited in embodiments of this application. This implementation is also applicable to the foregoing other method embodiments. This is not specifically limited in this application.

It should be noted that the method 1100 is also applicable to the methods 600 to 900. To be specific, that the public key of the RAS is configured by another network function (for example, the VSF) is also applicable to the procedure for applying for the token by the NF. This is not specifically limited in this application.

In the method disclosed in this application, the NF registration procedure in which the public key server is deployed is used as an example. Through cross-layer parameter transfer between the network layer and the RA layer, the network layer is aware of the attestation result of remote attestation on the NFc performed at the RA layer or on a management plane. This ensures that the NFc registered at the network layer is secure and trustworthy, and effectively mitigates a security risk caused by virtualization and softwarization. In addition, the network layer does not participate in the remote attestation at the RA layer, so that the NF registration procedure at the network layer is decoupled from the remote attestation procedure at the RA layer and a control plane is decoupled from the management plane to the utmost. Another network function (for example, the VSF) at the network layer other than the NRF configures the public key of the RAS, and performs integrity check and decryption on the attestation result, to reduce operating pressure of the NRF. In this way, behavior logic of the NRF is simple, and the existing function of the NRF is slightly modified.

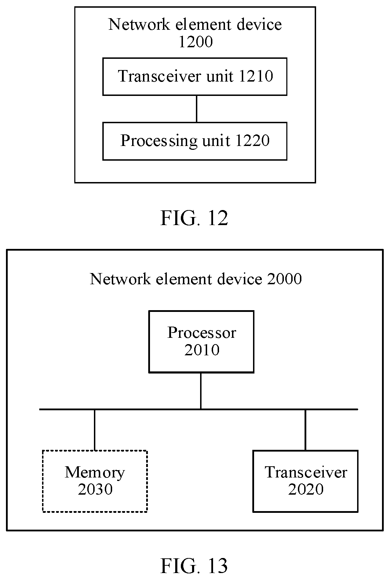

The foregoing details embodiments related to the communication methods of this application with reference to FIG. 1 to FIG. 11. The following details embodiments related to network element devices of this application with reference to FIG. 12 and FIG. 13. It should be understood that descriptions of the apparatus embodiments are corresponding to the descriptions of the method embodiments. Therefore, for content that is not detailed, refer to the foregoing method embodiments.

FIG. 12 is a block diagram of a network element device according to an embodiment of this application. As shown in FIG. 12, the device 1200 may include a transceiver unit 1210 and a processing unit 1220. The transceiver unit 1210 may perform external communication, and the processing unit 1220 is configured to process data. The transceiver unit 1210 may also be referred to as a communication interface or a transceiver unit.

In a possible design, the device 1200 may implement a step or procedure performed by the first network function network element (for example, the NFc) in the foregoing method embodiments. The processing unit 1220 is configured to perform processing related operations of the first network function network element in the foregoing method embodiments. The transceiver unit 1210 is configured to perform sending/receiving related operations of the first network function network element in the foregoing method embodiments.

For example, the transceiver unit 1210 is configured to obtain integrity-protected attestation information, where the attestation information includes an attestation result and range indication information associated with the attestation result, the attestation result indicates whether the first network function network element is trustworthy, the range indication information indicates a validity range of the attestation result, and the range indication information includes an identifier of the first network function network element.

The processing unit 1220 is configured to generate a service request message when determining that a service provided by a second network function network element is to be requested, where the service request message includes the attestation information and an identifier of the first network function network element.

The transceiver unit 1210 is further configured to send the service request message to the second network function network element.

In another possible design, the device 1200 may implement a step or procedure performed by the second network function network element (for example, the NRF) in the foregoing method embodiments. The transceiver unit 1210 is configured to perform sending/receiving related operations of the second network function network element in the foregoing method embodiments. The processing unit 1220 is configured to perform processing related operations of the second network function network element in the foregoing method embodiments.

For example, the transceiver unit 1210 is configured to receive a service request message from a first network function network element, where the service request message is used to request a service, and the service request message includes an identifier of the first network function network element.

The processing unit 1220 is configured to: when the service request message further includes integrity-protected attestation information, verify the integrity protection of the attestation information.

The processing unit 1220 is further configured to: when the verification on the integrity protection of the attestation information succeeds, determine, based on the attestation information, whether to provide the service for the first network function network element.

For example, the processing unit 1220 is further configured to: when the service request message does not include the integrity-protected attestation information, determine, based on a preconfigured execution policy, whether to provide the service for the first network function network element.

It should be understood that the device 1200 herein is embodied in a form of a functional unit. The term "unit" herein may be an application-specific integrated circuit (application-specific integrated circuit, ASIC), an electronic circuit, a processor configured to execute one or more software or firmware programs (for example, a shared processor, a dedicated processor, or a packet processor), a memory, a combined logic circuit, and/or another appropriate component supporting the described functions. In an optional example, a person skilled in the art can understand that, the device 1200 may be specifically a transmit end in the foregoing embodiments, and may be configured to perform the procedures and/or steps corresponding to the transmit end in the foregoing method embodiments. Alternatively, the device 1200 may be specifically a receive end in the foregoing embodiments, and may be configured to perform the procedures and/or steps corresponding to the receive end in the foregoing method embodiments. To avoid repetition, details are not described herein again.

The device 1200 in each of the foregoing solutions has functions of implementing the corresponding steps performed by the transmit end in the foregoing methods, or the device 1200 in each of the foregoing solutions has functions of implementing the corresponding steps performed by the receive end in the foregoing methods. The functions may be implemented by using hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform sending and receiving operations and related processing operations in the method embodiments.

In addition, the transceiver unit may be alternatively a transceiver circuit (which may include, for example, a receiving circuit and a sending circuit), and the processing unit may be a processing circuit. In this embodiment of this application, the apparatus in FIG. 12 may be the receive end or the transmit end in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 13 shows a network element device 2000 according to an embodiment of this application. The device 2000 includes a processor 2010 and a transceiver 2020. The processor 2010 and the transceiver 2020 communicate with each other through an internal connection path. The processor 2010 is configured to execute instructions, to control the transceiver 2020 to send a signal and/or receive a signal.

Optionally, the device 2000 may further include a memory 2030. The memory 2030 communicates with the processor 2010 and the transceiver 2020 through the internal connection path. The memory 2030 is configured to store the instructions, and the processor 2010 may execute the instructions stored in the memory 2030.

In a possible implementation, the device 2000 is configured to implement the procedures and steps corresponding to the first network function network element in the foregoing method embodiments.

For example, the transceiver 2020 is configured to obtain integrity-protected attestation information, where the attestation information includes an attestation result and range indication information associated with the attestation result, the attestation result indicates whether the first network function network element is trustworthy, the range indication information indicates a validity range of the attestation result, and the range indication information includes an identifier of the first network function network element.

The processor 2010 is configured to generate a service request message when determining that a service provided by a second network function network element is to be requested, where the service request message includes the attestation information and an identifier of the first network function network element.

The transceiver 2020 is further configured to send the service request message to the second network function network element.

In another possible implementation, the device 2000 is configured to implement the procedures and steps corresponding to the second network function network element in the foregoing method embodiments.

For example, the transceiver 2020 is configured to receive a service request message from a first network function network element, where the service request message is used to request a service, and the service request message includes an identifier of the first network function network element.

The processor 2010 is configured to: when the service request message further includes integrity-protected attestation information, verify the integrity protection of the attestation information.

The processor 2010 is further configured to: when the verification on the integrity protection of the attestation information succeeds, determine, based on the attestation information, whether to provide the service for the first network function network element.

For example, the processor 2010 is further configured to: when the service request message does not include the integrity-protected attestation information, determine, based on a preconfigured execution policy, whether to provide the service for the first network function network element.

It should be understood that the device 2000 may be specifically a transmit end or a receive end in the foregoing embodiments, or may be a chip or a chip system. Correspondingly, the transceiver 2020 may be a transceiver circuit of the chip. This is not limited herein. Specifically, the device 2000 may be configured to perform the steps and/or procedures corresponding to the transmit end or the receive end in the foregoing method embodiments.

Optionally, the memory 2030 may include a read-only memory and a random access memory, and provide instructions and data for the processor. A part of the memory may further include a nonvolatile random access memory. For example, the memory may further store device type information. The processor 2010 may be configured to execute the instructions stored in the memory. When the processor 2010 executes the instructions stored in the memory, the processor 2010 is configured to perform the steps and/or the procedures corresponding to the transmit end or the receive end in the foregoing method embodiments.

In an implementation process, steps in the foregoing methods may be implemented by using an integrated logic circuit of hardware in the processor, or by using instructions in a form of software. The steps of the methods disclosed with reference to embodiments of this application may be directly implemented by a hardware processor, or may be implemented by a combination of the hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware in the processor. To avoid repetition, details are not described herein again.

It should be noted that the processor in embodiments of this application may be an integrated circuit chip, and has a signal processing capability. In an implementation process, steps in the foregoing method embodiments may be implemented by using an integrated logic circuit of hardware in the processor, or by using instructions in a form of software. The processor may be a general purpose processor, a digital signal processor (DSP), an application-specific integrated circuit (ASIC), a field programmable gate array (FPGA), another programmable logic device, a discrete gate, a transistor logic device, or a discrete hardware component. The processor in embodiments of this application can implement or perform the methods, steps, and logical block diagrams disclosed in embodiments of this application. The general purpose processor may be a microprocessor, or the processor may be any conventional processor or the like. The steps of the methods disclosed with reference to embodiments of this application may be directly implemented by using a hardware decoding processor, or may be implemented by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with the hardware in the processor.

It can be understood that the memory in embodiments of this application may be a volatile memory or a nonvolatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example rather than limitative description, many forms of RAMs are available, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory in the systems and the methods that are described in this specification is intended to include but is not limited to these memories and any other appropriate types of memories.

Based on the methods provided in embodiments of this application, this application further provides a computer program product. The computer program product includes computer program code. When the computer program code is run on a computer, the computer is enabled to perform the methods in the foregoing embodiments.

Based on the methods provided in embodiments of this application, this application further provides a computer-readable medium. The computer-readable medium stores program code. When the program code is run on a computer, the computer is enabled to perform the methods in the foregoing embodiments.

A person of ordinary skill in the art can be aware that, in combination with the examples described in embodiments disclosed in this specification, units and algorithm steps can be implemented by electronic hardware or a combination of computer software and electronic hardware. Whether the functions are performed by using hardware or software depends on particular applications and design constraints of the technical solutions. A person skilled in the art may use a different method to implement the described functions for each particular application, but it should not be considered that the implementation goes beyond the scope of this application.

It can be clearly understood by a person skilled in the art that, for the purpose of convenient and brief description, for detailed working processes of the systems, apparatuses, and units described above, refer to the corresponding processes in the foregoing method embodiments. Details are not described herein again.

In the several embodiments provided in this application, it should be understood that the disclosed systems, apparatuses, and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. In addition, the displayed or discussed mutual couplings or direct couplings or communication connections may be implemented through some interfaces. The indirect couplings or communication connections between the apparatuses or units may be implemented in an electrical form, a mechanical from, or another form.

The units described as separate parts may or may not be physically separate, and parts displayed as units may or may not be physical units. To be specific, the parts may be located in one position or may be distributed on a plurality of network units. Some or all of the units may be selected depending on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining (S510), by a first network function network element, integrity-protected attestation information, wherein the attestation information comprises an attestation result and range indication information associated with the attestation result, the attestation result indicates whether the first network function network element is trustworthy, the range indication information indicates a validity range of the attestation result, and the range indication information comprises an identifier of the first network function network element;
generating (S520), by the first network function network element, a service request message when determining that a service provided by a second network function network element is to be requested, wherein the service request message comprises the attestation information and an identifier of the first network function network element; and
sending (S530), by the first network function network element, the service request message to the second network function network element.

2. The method according to claim 1, wherein the range indication information further comprises one or more of the following:
configuration data of the first network function network element or a part of the configuration data; or
an identifier of the second network function network element.

3. The method according to claim 1 or 2, wherein the method further comprises:
sending, by the first network function network element, a remote attestation request to a verifier, wherein the remote attestation request comprises a measurement, and the measurement is used to indicate a running status of the first network function network element; and
the obtaining, by a first network function network element, integrity-protected attestation information is specifically:
receiving, by the first network function network element, the attestation information from the verifier, wherein the attestation information is associated with the measurement.

4. The method according to claim 3, wherein the method further comprises:
receiving, by the first network function network element, a freshness parameter from the second network function network element, wherein
the remote attestation request further comprises the freshness parameter, and the attestation information is also associated with the freshness parameter.

5. The method according to claim 4, wherein the range indication information further comprises the freshness parameter.

6. The method according to any one of claims 1 to 5, wherein the sending, by the first network function network element, the service request message to the second network function network element comprises:
when the attestation result indicates that the first network function network element is trustworthy, sending, by the first network function network element, the service request message to the second network function network element.

7. The method according to any one of claims 1 to 6, wherein the range indication information further comprises time-validity information of the attestation result, and the time-validity information comprises one or more of the following:
a generation time of the attestation result;
a generation time and validity duration of the attestation result;
a validity deadline of the attestation result; or
a counter value of the attestation result.

8. The method according to any one of claims 1 to 7, wherein when the service is a registration service, the service request message further comprises configuration data of the first network function network element, and the service request message is used to request that the configuration data of the first network function network element be stored.

9. The method according to any one of claims 1 to 7, wherein when the service is an authorization service, the attestation information further comprises a validity period of the attestation result, the service request message is used to request to obtain a first token, the first token is used to authorize the first network function network element to access a service of a third network function network element, and the method further comprises:
receiving, by the first network function network element, the first token and a validity period of the first token from the second network function network element, wherein the validity period of the first token is less than or equal to the validity period of the attestation result.

10. A communication method, comprising:
receiving (S530), by a second network function network element, a service request message from a first network function network element, wherein the service request message is used to request a service, and the service request message comprises an identifier of the first network function network element;
when the service request message further comprises integrity-protected attestation information, verifying (S540), by the second network function network element, the integrity protection of the attestation information; and
when the verification on the integrity protection of the attestation information succeeds, determining (S550), by the second network function network element based on the attestation information, whether to provide the service for the first network function network element.

11. A communication method, wherein the method comprises the method according to any one of claims 1 to 9, and the method according to claim 10.

12. A network element device or a chip of the network element device, comprising:
a unit configured to implement the method according to any one of claims 1 to 9; and/or
a unit configured to implement the method according to claim 10.

13. A communication system, comprising:
a first network function network element configured to implement the method according to any one of claims 1 to 9; and
a second network function network element configured to implement the method according to claim 10.

14. A computer program product, wherein when the computer program product is executed by a network element device, the method according to any one of claims 1 to 10 is implemented.

15. A computer-readable storage medium, wherein the computer-readable storage medium stores a computer program, and when the computer program is run, a computer is enabled to perform the method according to any one of claims 1 to 10.

## Patentansprüche

1. Kommunikationsverfahren, umfassend:
Erlangen (S510), durch ein erstes Netzfunktionsnetzelement, von integritätsgeschützten Bestätigungsinformationen, wobei die Bestätigungsinformationen ein Bestätigungsergebnis und Bereichsanzeigeinformationen, die dem Bestätigungsergebnis zugeordnet sind, umfassen, wobei das Bestätigungsergebnis anzeigt, ob das erste Netzfunktionsnetzelement vertrauenswürdig ist, die Bereichsanzeigeinformationen einen Gültigkeitsbereich des Bestätigungsergebnisses anzeigen und die Bereichsanzeigeinformationen eine Kennung des ersten Netzfunktionsnetzelements umfassen;
Erzeugen (S520), durch das erste Netzfunktionsnetzelement, einer Dienstanforderungsnachricht beim Bestimmen, dass ein Dienst, der durch ein zweites Netzfunktionsnetzelement bereitgestellt wird, anzufordern ist, wobei die Dienstanforderungsnachricht die Bestätigungsinformationen und eine Kennung des ersten Netzfunktionsnetzelements umfasst; und
Senden (S530), durch das erste Netzfunktionsnetzelement, der Dienstanforderungsnachricht an das zweite Netzfunktionsnetzelement.

2. Verfahren nach Anspruch 1, wobei die Bereichsanzeigeinformationen ferner eins oder mehrere des Folgenden umfassen:
Konfigurationsdaten des ersten Netzfunktionsnetzelements oder einen Teil der Konfigurationsdaten; oder
eine Kennung des zweiten Netzfunktionsnetzelements.

3. Verfahren nach Anspruch 1 oder 2, wobei das Verfahren ferner Folgendes umfasst:
Senden, durch das erste Netzfunktionsnetzelement, einer Remote-Bestätigungsanforderung an einen Verifizierer, wobei die Remote-Bestätigungsanforderung eine Messung umfasst und die Messung dazu verwendet wird, einen Betriebszustand des ersten Netzfunktionsnetzelements anzuzeigen; und
wobei das Erlangen, durch ein erstes Netzfunktionsnetzelement, von integritätsgeschützten Bestätigungsinformationen insbesondere Folgendes beinhaltet:
Empfangen, durch das erste Netzfunktionsnetzelement, der Bestätigungsinformationen von dem Verifizierer, wobei die Bestätigungsinformationen der Messung zugeordnet sind.

4. Verfahren nach Anspruch 3, wobei das Verfahren ferner Folgendes umfasst:
Empfangen, durch das erste Netzfunktionsnetzelement, eines Aktualitätsparameters von dem zweiten Netzfunktionsnetzelement, wobei
die Remote-Bestätigungsanfrage ferner den Aktualitätsparameter umfasst und die Bestätigungsinformationen außerdem dem Aktualitätsparameter zugeordnet sind.

5. Verfahren nach Anspruch 4, wobei die Bereichsanzeigeinformationen ferner den Aktualitätsparameter umfassen.

6. Verfahren nach einem der Ansprüche 1 bis 5, wobei das Senden, durch das erste Netzfunktionsnetzelement, der Dienstanforderungsnachricht an das zweite Netzfunktionsnetzelement ferner Folgendes umfasst:
wenn das Bestätigungsergebnis anzeigt, dass das erste Netzfunktionsnetzelement vertrauenswürdig ist, Senden, durch das erste Netzfunktionsnetzelement, der Dienstanforderungsnachricht an das zweite Netzfunktionsnetzelement.

7. Verfahren nach einem der Ansprüche 1 bis 6, wobei die Bereichsanzeigeinformationen ferner Zeitgültigkeitsinformationen des Bestätigungsergebnisses umfassen und die Zeitgültigkeitsinformationen eins oder mehrere des Folgenden umfassen:
eine Erzeugungszeit des Bestätigungsergebnisses;
eine Erzeugungszeit und eine Gültigkeitsdauer des Bestätigungsergebnisses;
ein Gültigkeitsende des Bestätigungsergebnisses; oder
ein Zählerwert des Bestätigungsergebnisses.

8. Verfahren nach einem der Ansprüche 1 bis 7, wobei, wenn der Dienst ein Registrierungsdienst ist, die Dienstanforderungsnachricht ferner Konfigurationsdaten des ersten Netzfunktionsnetzelements umfasst und die Dienstanforderungsnachricht dazu verwendet wird, anzufordern, dass die Konfigurationsdaten des ersten Netzfunktionsnetzelements gespeichert werden.

9. Verfahren nach einem der Ansprüche 1 bis 7, wobei, wenn der Dienst ein Autorisierungsdienst ist, die Bestätigungsinformationen ferner eine Gültigkeitsdauer des Bestätigungsergebnisses umfassen, die Dienstanforderungsnachricht dazu verwendet wird, anzufordern, ein erstes Token zu erlangen, wobei das erste Token dazu verwendet wird, das erste Netzfunktionsnetzelement zu autorisieren, auf einen Dienst eines dritten Netzfunktionsnetzelements zuzugreifen, und wobei das Verfahren ferner Folgendes umfasst:
Empfangen, durch das erste Netzfunktionsnetzelement, des ersten Tokens und einer Gültigkeitsdauer des ersten Tokens von dem zweiten Netzfunktionsnetzelement, wobei die Gültigkeitsdauer des ersten Tokens kleiner als oder gleich der Gültigkeitsdauer des Bestätigungsergebnisses ist.

10. Kommunikationsverfahren, umfassend:
Empfangen (S530), durch ein zweites Netzfunktionsnetzelement, einer Dienstanforderungsnachricht von einem ersten Netzfunktionsnetzelement, wobei die Dienstanforderungsnachricht dazu verwendet wird, einen Dienst anzufordern, und die Dienstanforderungsnachricht eine Kennung des ersten Netzfunktionsnetzelements umfasst;
wenn die Dienstanforderungsnachricht ferner integritätsgeschützte Bestätigungsinformationen umfasst, Verifizieren (S540), durch das zweite Netzfunktionsnetzelement, an dem Integritätsschutz der Bestätigungsinformationen; und
wenn die Verifizierung an dem Integritätsschutz der Bestätigungsinformationen erfolgreich ist, Bestimmen (S550), durch das zweite Netzfunktionsnetzelement basierend auf den Bestätigungsinformationen, ob der Dienst für das erste Netzfunktionsnetzelement bereitzustellen ist.

11. Kommunikationsverfahren, wobei das Verfahren das Verfahren nach einem der Ansprüche 1 bis 9 und das Verfahren nach Anspruch 10 umfasst.

12. Netzelementvorrichtung oder ein Chip der Netzelementvorrichtung, umfassend:
eine Einheit, die dazu konfiguriert ist, das Verfahren nach einem der Ansprüche 1 bis 9 umzusetzen; und/oder
eine Einheit, die dazu konfiguriert ist, das Verfahren nach Anspruch 10 umzusetzen.

13. Kommunikationssystem, umfassend:
ein erstes Netzfunktionsnetzelement, das dazu konfiguriert ist, das Verfahren nach einem der Ansprüche 1 bis 9 umzusetzen; und
ein zweites Netzfunktionsnetzelement, das dazu konfiguriert ist, das Verfahren nach Anspruch 10 umzusetzen.

14. Computerprogrammprodukt, wobei, wenn das Computerprogrammprodukt durch eine Netzelementvorrichtung ausgeführt wird, das Verfahren nach einem der Ansprüche 1 bis 10 umgesetzt wird.

15. Computerlesbares Speichermedium, wobei das computerlesbare Speichermedium ein Computerprogramm speichert und, wenn das Computerprogramm ausgeführt wird, ein Computer in die Lage versetzt wird, das Verfahren nach einem der Ansprüche 1 bis 10 durchzuführen.

## Revendications

1. Procédé de communication, comprenant :
l'obtention (S510), par un premier élément de réseau de fonction réseau, d'informations d'attestation protégées par l'intégrité, dans lequel les informations d'attestation comprennent un résultat d'attestation et des informations d'indication de portée associées au résultat d'attestation, le résultat d'attestation indique si le premier élément de réseau de fonction réseau est digne de confiance, les informations d'indication de portée indiquent une portée de validité du résultat d'attestation, et les informations d'indication de portée comprennent un identifiant du premier élément de réseau de fonction réseau ;
la génération (S520), par le premier élément de réseau de fonction réseau, d'un message de demande de service lors de la détermination qu'un service fourni par un deuxième élément de réseau de fonction réseau doit être demandé, dans lequel le message de demande de service comprend les informations d'attestation et un identifiant du premier élément de réseau de fonction réseau ; et
l'envoi (S530), par le premier élément de réseau de fonction réseau, du message de demande de service au deuxième élément de réseau de fonction réseau.

2. Procédé selon la revendication 1, dans lequel les informations d'indication de portée comprennent en outre l'une ou plusieurs :
des données de configuration du premier élément de réseau de fonction réseau ou une partie des données de configuration ; ou
d'un identifiant du deuxième élément de réseau de fonction réseau.

3. Procédé selon la revendication 1 ou 2, dans lequel le procédé comprend en outre :
l'envoi, par le premier élément de réseau de fonction réseau, d'une demande d'attestation à distance à un vérificateur, dans lequel la demande d'attestation à distance comprend une mesure, et la mesure est utilisée pour indiquer l'état de fonctionnement du premier élément de réseau de fonction réseau ; et
l'obtention, par le premier élément de réseau de fonction réseau, des informations d'attestation protégées par l'intégrité consiste plus particulièrement en :
la réception, par le premier élément de réseau de fonction, des informations d'attestation du vérificateur, dans lequel les informations d'attestation sont associées à la mesure.

4. Procédé selon la revendication 3, dans lequel le procédé comprend en outre :
la réception, par le premier élément de réseau de fonction réseau, d'un paramètre de fraîcheur à partir du deuxième élément de réseau de fonction réseau, dans lequel
la demande d'attestation à distance comprend en outre le paramètre de fraîcheur, et les informations d'attestation sont en outre associées au paramètre de fraîcheur.

5. Procédé selon la revendication 4, dans lequel les informations d'indication de portée comprennent en outre le paramètre de fraîcheur.

6. Procédé selon l'une quelconque des revendications 1 à 5, dans lequel l'envoi, par le premier élément de réseau de fonction réseau, du message de demande de service au deuxième élément de réseau de fonction réseau comprend :
lorsque le résultat de l'attestation indique que le premier élément de réseau de fonction réseau est digne de confiance, l'envoi, par le premier élément de réseau de fonction réseau, du message de demande de service au deuxième élément de réseau de fonction réseau.

7. Procédé selon l'une quelconque des revendications 1 à 6, dans lequel les informations d'indication de portée comprennent en outre des informations de validité temporelle du résultat d'attestation, et les informations de validité temporelle comprennent l'un ou plusieurs des éléments suivants :
un temps de génération du résultat d'attestation ;
un temps de génération et une durée de validité du résultat d'attestation ;
une date limite de validité du résultat 'd'attestation ; ou
une valeur de contrepartie du résultat d'attestation.

8. Procédé selon l'une quelconque des revendications 1 à 7, dans lequel, lorsque le service est un service d'enregistrement, le message de demande de service comprend en outre des données de configuration du premier élément de réseau de fonction réseau, et le message de demande de service est utilisé pour demander que les données de configuration du premier élément de réseau de fonction réseau soient stockées.

9. Procédé selon l'une quelconque des revendications 1 à 7, dans lequel, lorsque le service est un service d'autorisation, les informations d'attestation comprennent en outre une période de validité du résultat d'attestation, le message de demande de service est utilisé pour demander l'obtention d'un premier jeton, le premier jeton est utilisé pour autoriser le premier élément de réseau de fonction réseau à accéder à un service d'un troisième élément de réseau de fonction réseau, et le procédé comprend en outre :
la réception, par le premier élément de réseau de fonction réseau, du premier jeton et d'une période de validité du premier jeton à partir du deuxième élément de réseau de fonction réseau, dans lequel la période de validité du premier jeton est inférieure ou égale à la période de validité du résultat d'attestation.

10. Procédé de communication, comprenant :
la réception (S530), par un deuxième élément de réseau de fonction réseau, d'un message de demande de service à partir d'un premier élément de réseau de fonction réseau, dans lequel le message de demande de service est utilisé pour demander un service, et le message de demande de service comprend un identifiant du premier élément de réseau de fonction réseau ;
lorsque le message de demande de service comprend en outre des informations d'attestation protégées par intégrité, la vérification (S540), par le deuixème élément de réseau de fonction réseau, de la protection d'intégrité des informations d'attestation ; et
lorsque la vérification de la protection de l'intégrité des informations d'attestation réussit, le fait de déterminer (S550), par le deuxième élément de réseau de fonction réseau sur la base des informations d'attestation, s'il convient de fournir le service au premier élément de réseau de fonction réseau.

11. Procédé de communication, dans lequel le procédé comprend le procédé selon l'une quelconque des revendications 1 à 9, et le procédé selon la revendication 10.

12. Dispositif d'élément de réseau ou une puce du dispositif d'élément de réseau, comprenant :
une unité configurée pour mettre en œuvre le procédé selon l'une quelconque des revendications 1 à 9 ; et/ou
une unité configurée pour mettre en œuvre le procédé selon la revendication 10.

13. Système de communication, comprenant :
le premier élément de réseau de fonction réseau configuré pour mettre en œuvre le procédé selon l'une quelconque des revendications 1 à 9 ; et
un deuxième élément de réseau de fonction réseau configuré pour mettre en œuvre le procédé selon la revendication 10.

14. Produit de programme informatique, dans lequel lorsque le produit de programme informatique est exécuté par un dispositif d'élément de réseau, le procédé selon l'une quelconque des revendications 1 à 10 est mis en œuvre.

15. Support de stockage lisible par ordinateur, dans lequel le support de stockage lisible par ordinateur stocke un programme informatique ; et lorsque le programme informatique est exécuté sur un ordinateur, l'ordinateur est activé pour réaliser le procédé selon l'une quelconque des revendications 1 à 10.
